(19) Europäisches Patentamt
European Patent Office
Office européen des brevets

(11) **EP 4 152 579 B1**

(12) **EUROPEAN PATENT SPECIFICATION**

(45) Date of publication and mention
of the grant of the patent:
**24.06.2026 Bulletin 2026/26**

(21) Application number: **22195370.6**

(22) Date of filing: **13.09.2022**

(51) International Patent Classification (IPC):
*H02K 33/16* (2006.01)    *G02B 26/08* (2006.01)
*H01F 7/121* (2006.01)    *H01F 7/122* (2006.01)
*G02B 26/10* (2006.01)    *H01F 7/14* (2006.01)
*H02K 1/14* (2006.01)

(52) Cooperative Patent Classification (CPC):
**H02K 33/16; G02B 26/105; H01F 7/122;
H01F 7/14;** H02K 1/143

(54) **ROTARY RECIPROCATING DRIVE ACTUATOR**

HIN- UND HERGEHENDER DREHANTRIEB

ACTIONNEUR D'ENTRAÎNEMENT ROTATIF À MOUVEMENT ALTERNATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2021 JP 2021150502**

(43) Date of publication of application:
**22.03.2023 Bulletin 2023/12**

(73) Proprietor: **MITSUMI ELECTRIC CO., LTD.
Tama-shi, Tokyo 206-8567 (JP)**

(72) Inventors:
• **KITAMURA, Yasutaka**
**Tokyo, 206-8567 (JP)**
• **TAKAHASHI, Yuki**
**Tokyo, 206-8567 (JP)**
• **KAGAMI, Masaharu**
**Tokyo, 206-8567 (JP)**
• **MASAMOTO, Kai**
**Tokyo, 206-8567 (JP)**

(74) Representative: **Dennemeyer & Associates S.A.
55, rue des Bruyères
1274 Howald (LU)**

(56) References cited:
**EP-A1- 3 817 204      JP-A- H0 731 119
JP-A- H06 292 349      US-A- 5 708 406**

# EP 4 152 579 B1

## Description

### Technical Field

The present invention relates to a rotary reciprocating drive actuator.

### Background Art

Conventionally, a rotational drive actuator is used as an actuator used in a scanner such as a multifunctional machine, a laser beam printer, or the like. Specifically, the rotary reciprocating drive actuator causes a reciprocating rotation of the mirror of the scanner to change a reflection angle of a laser beam to achieve optical scanning of an object.

Patent literature (hereinafter, referred to as "PTL") 1 discloses a galvanometer motor as this type of rotary reciprocating drive actuator. As galvanometer motors, various types of galvanometer motors are known in addition to the type of galvanometer motor with the structure disclosed in PTL 1 and a galvanometer motor of a movable coil type in which a coil is attached to a mirror.

PTL 1 discloses a beam scanner in which four permanent magnets are disposed on a rotational shaft to which the mirror is attached, such that the permanent magnets are magnetized in the radial direction of the rotational shaft, and in which cores that have magnetic poles and around which a coil is wound are disposed to sandwich the rotational shaft.

### Citation List

#### Patent Literature

PTL 1: Japanese Patent No. 4727509

The document US 5 708 406 A discloses an improved rotary actuator having a reduced height. The actuator has a stator core having excitable poles and yokes, a rotor with a rotor magnet, a bobbin frame having a rotor container and bobbin portions with excitable coils. The rotor container has a bore for receiving the rotor and magnet openings for receiving a pair of stator magnets.

The document JP H06 292349 A discloses a two-position driven-type high-speed motor being constituted of a rotor which is magnetized in four poles, a first winding which is wound round one of the projections out of the four projections which are formed on a stator core nearly deg. apart from the adjacent ones, and a second winding which is wound round the projection which is formed about deg. apart from the projection around which the first winding a is wound.

The document JP H07 31119 A discloses an electromagnetic limited rotation motor equipped with a detector for detecting information relating to the rotation of a rotary shaft required for highly accurate control of rotation with high accuracy.

### Summary of Invention

#### Technical Problem

Meanwhile, in the rotary reciprocating drive actuator of the movable coil type, the heat generation of the coil during driving may adversely affect the surface state of the mirror, the bonding state of the mirror bonded to the rotational shaft, the shape of the mirror including warpage, and/or the like. Further, in the rotary reciprocating drive actuator of the movable coil type, there is a problem that it is difficult to increase an input current to the coil when considering the heat generation of the coil during energization, and it is difficult to increase the size of the mirror being a movable body and/or the amplitude. Furthermore, there is a problem that the assemblability is poor since wiring to the coil needs to be drawn out to a fixing body side with respect to the mirror being the movable body.

In this regard, in PTL 1, the magnet is disposed on the movable body side. It is thus possible to solve the above-described problem of the movable coil type. Meanwhile, in this configuration, two poles of the magnet are disposed with respect to one pole of a core in order that the magnet be suitably stationary at the reciprocating rotation center position with respect to the core, that is, in order to position a switching portion of magnetic poles of the magnet at the center of the core. Thus, in Cited Reference 1, the magnet is positioned around a shaft portion, with a predetermined distance in between for total of four poles.

Therefore, there is a problem that the amplitude of the movable body is reduced, that is, the swing range is reduced, for example, as compared with the case of configuring the same rotary reciprocating drive actuator as in PTL 1 using a two-pole magnet. In addition, since at least four magnets are used on the movable body side, a large number of components are used, resulting in a complicated configuration. Assembly is thus difficult.

An object of the present invention is to provide a rotary reciprocating drive actuator that can drive a reciprocating rotation of a movable body with a simple configuration, suitably in a more stable state, and with a high amplitude.

Solution to Problem

To achieve the above purpose, the present invention is configured to include the features of independent claim 1.

Advantageous Effects of Invention

According to the present invention, it is possible to drive a reciprocating rotation of the movable body with a simple configuration, suitably in a more stable state, and with a high amplitude.

Brief Description of Drawings

The above and other objects and features of the invention will appear more fully hereinafter from a consideration of the following description taken in connection with the accompanying drawing wherein one example is illustrated by way of example, in which;

FIG. 1 is an external perspective view of a rotary reciprocating drive actuator of Embodiment 1;
FIG. 2 is a longitudinal sectional view of the driving unit of the rotary reciprocating drive actuator;
FIG. 3 is a flat-surface-side exploded perspective view of the rotary reciprocating drive actuator;
FIG. 4 is a bottom-surface-side exploded perspective view of the rotary reciprocating drive actuator;
FIG. 5 is a cross-sectional view taken along line A-A in FIG. 2;
FIG. 6 is a bottom-surface-side perspective view of a core assembly;
FIG. 7 is a bottom-surface-side perspective view of a core body;
FIG. 8 is an exploded view of the core body;
FIG. 9 is a bottom-surface-side perspective view illustrating Variation 1 of the core assembly;
FIG. 10 is a plan cross-sectional view illustrating a principal part configuration of Variation 1 of the core assembly;
FIG. 11 is a bottom perspective view of a core body according to Modification 1 of the core assembly;
FIG. 12 is an exploded view of the core body;
FIG. 13 is an explanatory view of a magnetic attraction force of the rotary reciprocating drive actuator according to Embodiment 1;
FIG. 14 is an explanatory view of a magnetic circuit during de-energization of the rotary reciprocating drive actuator of Embodiment 1;
FIG. 15 is an explanatory view of the magnetic circuit during energization of the rotary reciprocating drive actuator of Embodiment 1;
FIG. 16 is an explanatory view of the magnetic circuit during energization of the rotary reciprocating drive actuator of Embodiment 1;
FIG. 17 is an external perspective view of a rotary reciprocating drive actuator of Embodiment 2;
FIG. 18 is a flat-surface-side exploded perspective view of the rotary reciprocating drive actuator;
FIG. 19 is a bottom-surface-side exploded perspective view of the rotary reciprocating drive actuator;
FIG. 20 is an external perspective view of a rotary reciprocating drive actuator according to Embodiment 3;
FIG. 21 is a flat-surface-side exploded perspective view of the rotary reciprocating drive actuator;
FIG. 22 is a bottom-surface-side exploded perspective view of the rotary reciprocating drive actuator; and
FIG. 23 is a diagram illustrating a principal part configuration of a scanner system using the rotary reciprocating drive actuator.

Description of Embodiments

Embodiments of the present invention will be described below with reference to the drawings.

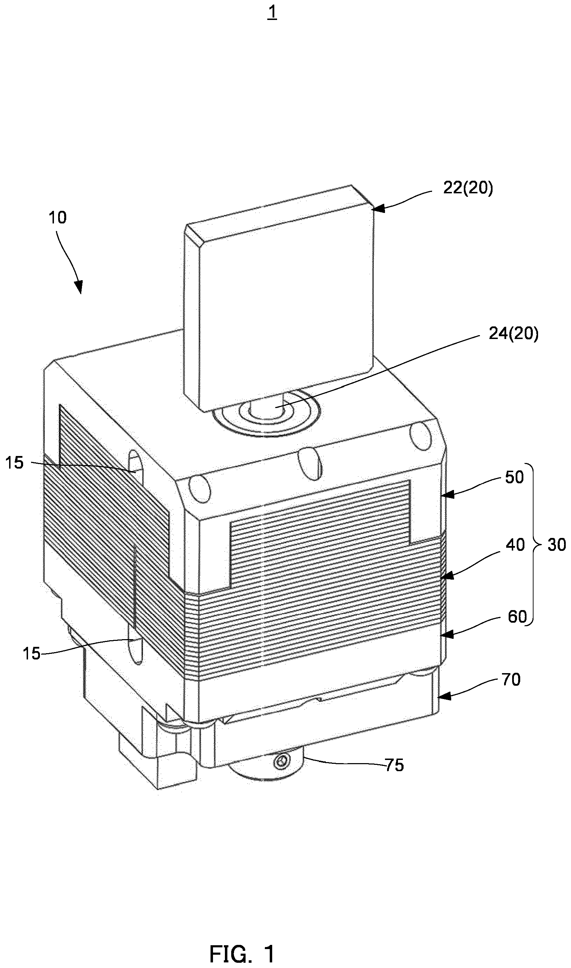

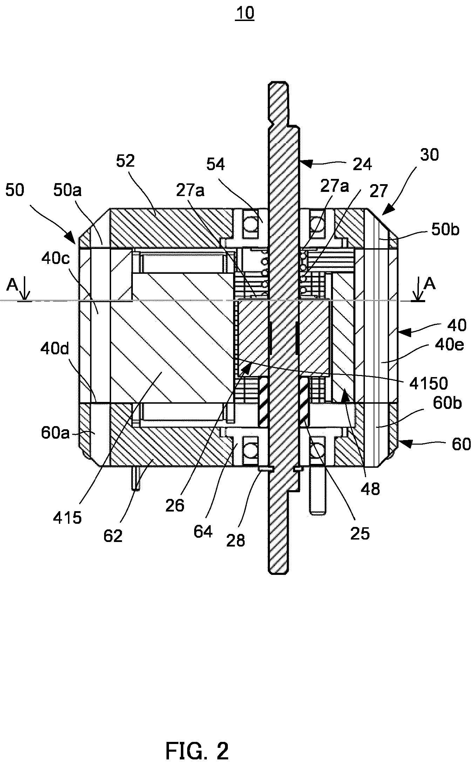

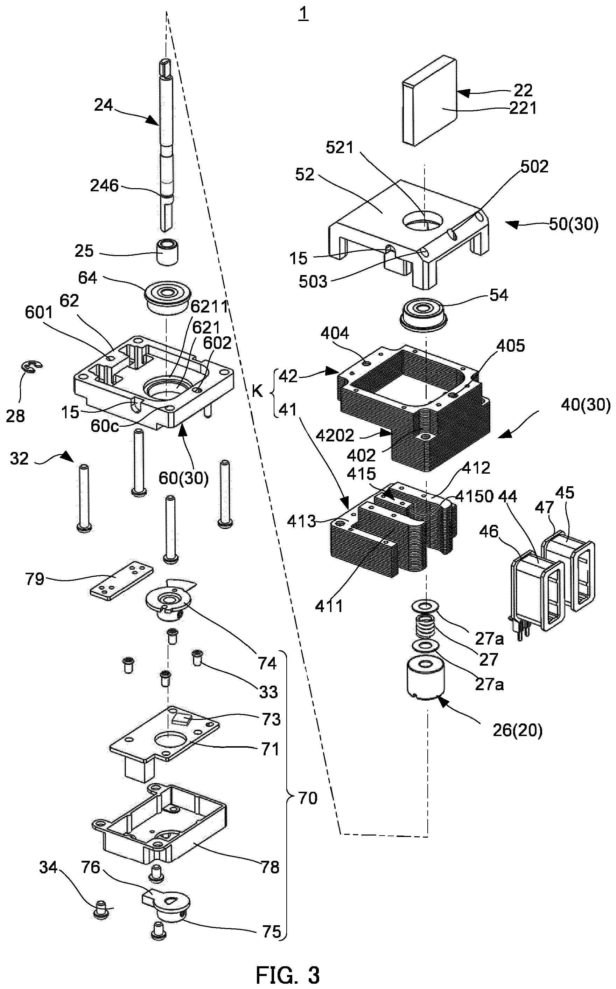

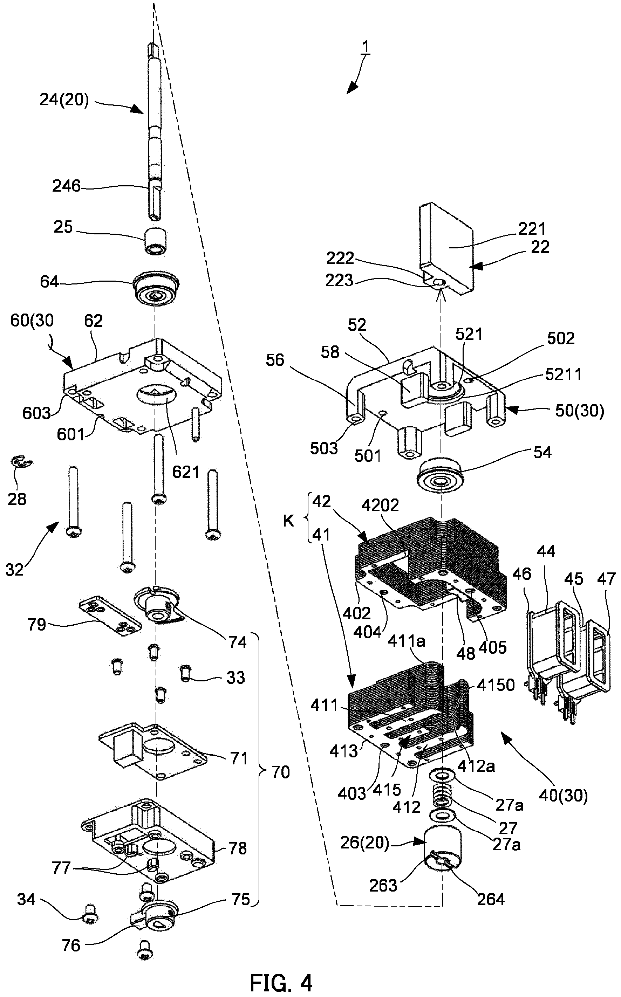

FIG. 1 is an external perspective view of rotary reciprocating drive actuator 1 according to Embodiment 1, and FIG. 2 is a longitudinal sectional view of driving unit 10 of rotary reciprocating drive actuator 1. FIG. 3 and FIG. 4 are a flat-surface-side exploded perspective view and a bottom-surface-side exploded perspective view of rotary reciprocating drive actuator 1.
Rotary reciprocating drive actuator 1 is used, for example, in a Laser Imaging Detection and Ranging (LiDAR) apparatus. Note that, rotary reciprocating drive actuator 1 is also applicable to an optical scanning apparatus such as a multifunctional machine, a laser beam printer, or the like.
Rotary reciprocating drive actuator 1 illustrated in FIG. 1 broadly includes mirror part 22 and driving unit 10 that supports mirror part 22 such that the mirror part is rotatable and that drives a reciprocating rotation of mirror 22. Rotary reciprocating drive actuator 1 further includes angle sensor part 70 disposed in driving unit 10 and configured to detect the rotational angle position of mirror part 22.

<Mirror Part 22>

Mirror part 22 is a movable object in rotary reciprocating drive actuator 1, and is connected to rotational shaft 24. Mirror part 22 is formed by, for example, bonding mirror 221 to one surface of mirror holder 222. Rotational shaft 24 is inserted at one end portion thereof into insertion hole 223 in mirror holder 222 and is fixed thereto. Note that, movable magnet (hereinafter, simply referred to as "magnet") 26 is fixed to a portion of rotational shaft 24 inserted into driving unit 10 and disposed in unit fixing part 30 of driving unit 10. The reciprocating rotation of magnet 26 is driven using a magnetic flux generated by unit fixing part 30 to be described later.

<Driving Unit 10>

Driving unit 10 includes unit movable part 20 including rotational shaft 24 and magnet 26, and unit fixing part 30 including coils 44 and 45 and configured to drive a reciprocating rotation of unit movable part 20 as illustrated in FIGS. 1 to 4.

Driving unit 10 supports mirror part 22 by rotational shaft 24 protruding from cube-shaped unit fixing part 30, and drives reciprocating rotation of mirror part 22 via rotational shaft 24. Unit fixing part 30 may have any shape such as a columnar shape, or may have a rectangular parallelepiped shape. Unit fixing part 30 is cube-shaped in the present embodiment. It is thus possible to reduce the placement space. Accordingly, space-saving placement such as placement in a gap in a corresponding cubic shape is possible.

Further, in driving unit 10, rotational shaft 24 is inserted through unit fixing part 30 and is supported such that reciprocating rotation is possible and in a state where opposite end portions of the rotational shaft protrude from unit fixing part 30. Rotational shaft 24 is connected to mirror part 22 and angle sensor part 70 respectively at the opposite end portions of the rotational shaft protruding from driving unit 10.

Driving unit 10 forms a compactly packaged unit that causes a reciprocating rotation of rotational shaft 24 around the axis, and can cause a reciprocating rotation of a movable object with a compact configuration only by connecting rotational shaft 24 to the movable object. Note that, unit movable part 20, together with mirror part 22, forms the movable body of rotary reciprocating drive actuator 1.

<Unit Fixing Part 30>

Unit fixing part 30 forms a part of driving unit 10 other than unit movable part 20 (for example, a part excluding rotational shaft 24 and magnet 26) as illustrated in FIGS. 2 and 3. Details of unit movable part 20 will be described later.

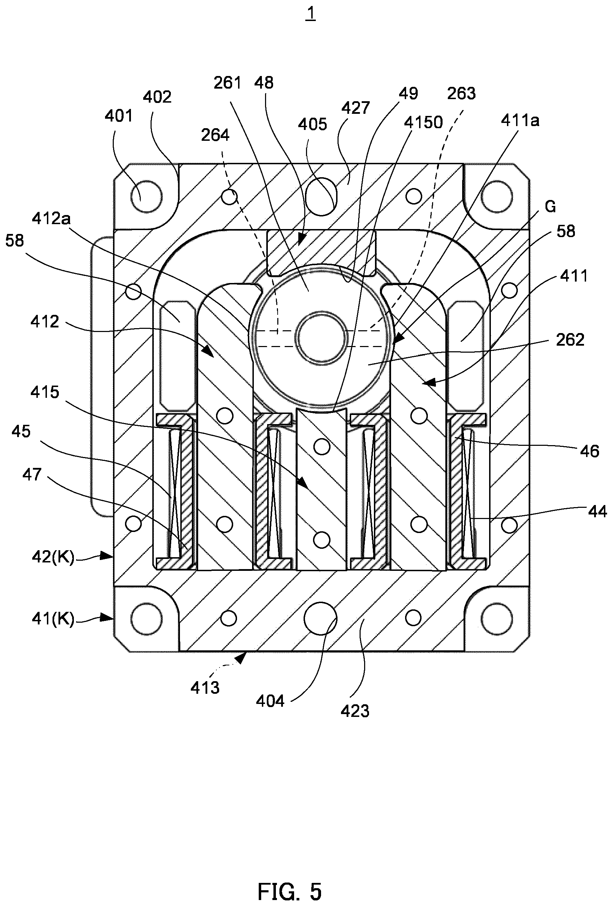

Unit fixing part 30 forms a fixing body of rotary reciprocating drive actuator 1. FIG. 5 is a cross-sectional view taken along line A-A of FIG. 2 and is a plan cross-sectional view illustrating a principal part configuration of a core assembly in rotary reciprocating drive actuator 1.

As illustrated in FIGS. 2 to 5, unit fixing part 30 includes: core assembly 40 that houses magnet 26 of unit movable part 20 therein, and from which rotational shaft 24 of unit movable part 20 rotatably protrudes; first shaft support 50; and second shaft support 60.

Unit fixing part 30 is configured such that core assembly 40 is sandwiched between first shaft support 50 and second shaft support 60 from both sides in the extending direction of rotational shaft 24, and first shaft support 50 and second shaft support 60 are fixed to core assembly 40.

Unit fixing part 30 integrally fixes first shaft support 50, core assembly 40, and second shaft support 60 to one another via fastening members 32. In unit fixing part 30, first shaft support 50 and second shaft support 60 cover the end surfaces of core assembly 40 on opposite sides where respective opposite end portions of rotational shaft 24 of unit movable part 20 protrude.

Unit fixing part 30 supports mirror part 22 by rotational shaft 24 protruding from the first shaft support 50 side. Angle sensor part 70 for detecting the rotational angle of rotational shaft 24 protruding from the second shaft support 60 side is disposed on second shaft support 60.

<Core Assembly 40>

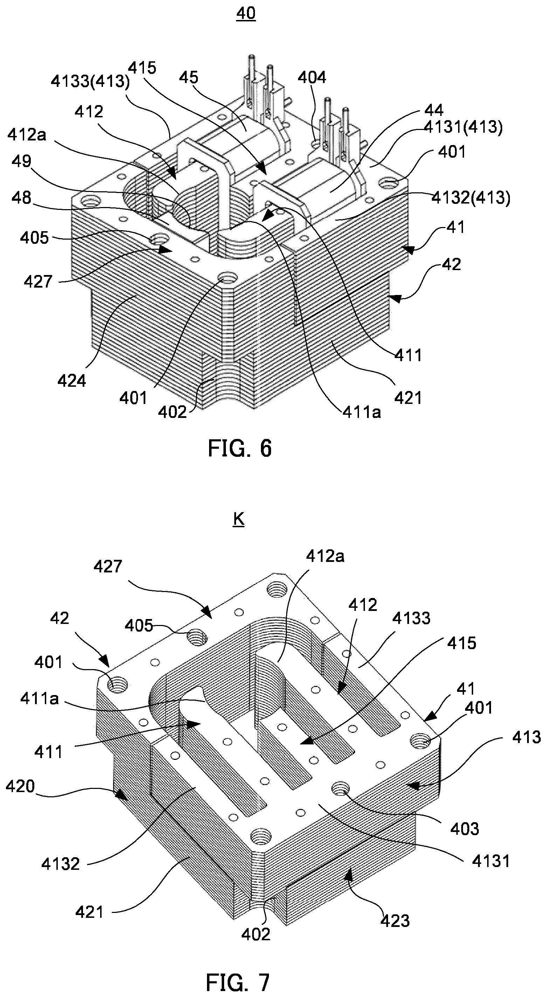

FIGS. 6 and 7 are explanatory views of the core assembly of the rotary reciprocating drive actuator. FIG. 6 is a bottom-surface-side perspective view of the core assembly, and FIG. 7 is a bottom-surface-side perspective view of a core body of the core assembly.

Core assembly 40 forms a magnetic circuit together with magnet 26 (see FIGS. 3 to 5), and includes coils 44 and 45, core body K around which coils 44 and 45 are wound, and rotational angle position holding portion (one example of the first magnetic attraction member) 48.

Core assembly 40 (specifically, core body K) includes a plurality of magnetic poles 411a and 412a, and has a rectangular parallelepiped shape. The core assembly is formed to surround, by a frame-shaped outer circumferential portion, magnetic poles 411a and 412a disposed inside the outer circumferential portion.

<Core Body K>

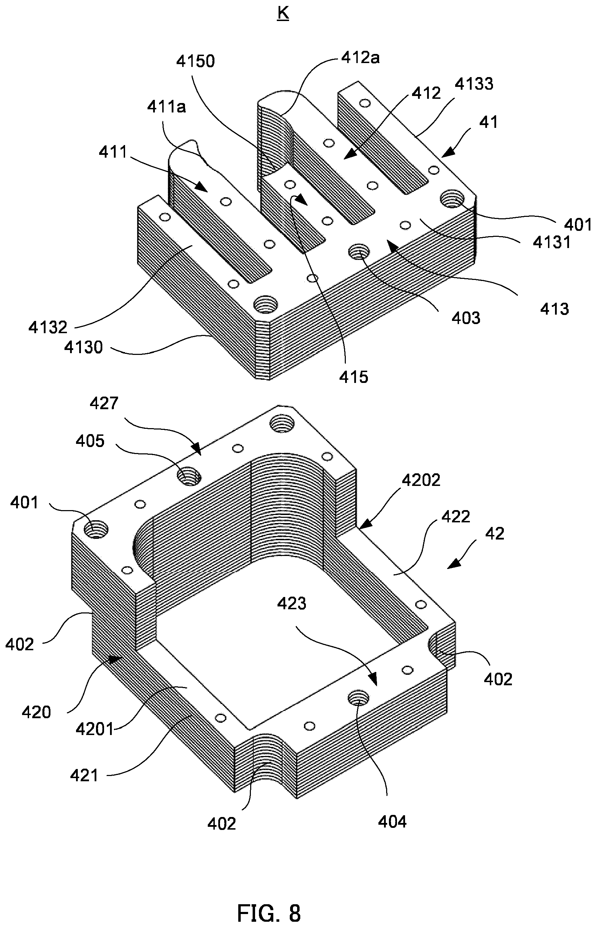

FIG. 7 is a bottom-surface-side perspective view of the core body, and FIG. 8 is an exploded view of the core body.

In the present embodiment, core body K is formed by combining two divided bodies in the axial direction, that is, in the thickness direction of core body K as illustrated in FIGS. 7 and 8. Core body K forms a magnetic path on the unit fixing part side. Core body K includes magnetic pole core 41 having an integral structure including a plurality of magnetic poles 411a and 412a and complementary pole portion 415, and magnetic path core 42 magnetically coupled to and integrated with magnetic pole core 41 to form a magnetic path with magnetic pole core 41.

In the present embodiment, core body K includes rod-shaped bodies 411 and 412 having a plurality of magnetic poles 411a and 412a, and surrounding portion 420 disposed to surround rod-shaped bodies 411 and 412 in four directions and forming the magnetic path connecting magnetic poles 411a and 412a.

In core body K, magnetic pole core 41 and magnetic path core 42 are combined with each other. Accordingly, rectangular parallelepiped rod-shaped bodies 411 and 412 having a cross-sectional area longer in the axial direction (thickness direction) than the width of the magnetic path are surrounded by a rectangular parallelepiped-shaped side portion longer in the axial direction (thickness direction) than the width of the magnetic path.

Magnetic pole core 41 and magnetic path core 42 allow a magnetic flux generated during energization of coils 44 and 45 to pass through the plurality of magnetic poles 411a and 412a. Magnetic pole core 41 and magnetic path core 42 are, for example, a laminated core formed by laminating electromagnetic steel plates such as silicon steel sheets (laminated members). The laminated structure of magnetic pole core 41 and magnetic path core 42 allows formation in a complex shape at low cost.

<Magnetic Pole Core 41>

Magnetic pole core 41 includes, as an integral structure, a plurality of rod-shaped bodies 411 and 412 respectively including a plurality of magnetic poles 411a and 412a at their tip end portions, and connecting frame-shaped body 413 that connects together the plurality of magnetic poles 411a and 412a and on which complementary pole portion (one example of the second magnetic attraction member) 415 is disposed.

Rod-shaped bodies 411 and 412 extend in parallel to each other from base end portions 411b and 412b to the tip end portions (including magnetic poles 411a and 412a), and a plurality of coils 44 and 45 are externally fitted to the rod-shaped bodies at intermediate portions, respectively.

When magnetically excited by energization of coils 44 and 45, magnetic poles 411a and 412a at the tip end portions of rod-shaped bodies 411 and 412 assume polarities depending on the energization direction.

The thicknesses of rod-shaped bodies 411 and 412 may be close to the thickness (the length in the extending direction of rotational shaft 24) of core body K itself, and bobbins 46 and 47 are externally fitted to the rod-shaped bodies. Rod-shaped bodies 411 and 412 are flush with connecting frame-shaped body 413 in magnetic pole core 41 at the surfaces thereof on one side in the thickness direction (the surfaces orthogonal to the axial direction) (the lower side in FIGS. 3 and 4, and the upper side in FIGS. 6 to 8). On the other hand, concerning the surfaces of rod-shaped bodies 411 and 412 on the other side (the upper side in FIGS. 3 and 4 and the lower side in FIGS. 6 to 8) and the surface of connecting frame-shaped body 413, rod-shaped bodies 411 and 412 and complementary pole portion 415 are disposed to protrude in the thickness direction (axial direction) from connecting frame-shaped body 413.

Thus, on the other side surface of magnetic pole core 41, a step portion is formed by rod-shaped bodies 411 and 412 and connecting frame-shaped body 413, and this step portion is engaged with a step portion on the magnetic path core 42 side. As a result, rod-shaped bodies 411 and 412 are configured to differ from surrounding portion 420 only in height in the axial direction.

Magnetic poles 411a and 412a are disposed to face the outer circumferential surface of magnet 26 with a predetermined distance therebetween. The shapes of portions (magnetic poles) of magnetic poles 411a and 412a facing the outer circumferential surface of magnet 26 are formed in a curved shape along the outer circumferential surface of magnet 26 correspondingly to the outer circumferential surface shape. These curved portions are disposed to face each other with predetermined distance (air gap) G (see FIG. 5) in between in a direction orthogonal to the extending direction of rod-shaped bodies 411 and 412, for example.

As illustrated in FIGS. 5 to 8, the external shapes of magnetic poles 411a and 412a have, for example, external dimensions that allow bobbins 46 and 47, around which coils 44 and 45 are wound, to be externally fitted to the magnetic poles from the tip end side. Thus, bobbins 46 and 47 can be positioned from the tip end side of rod-shaped bodies 411 and 412 in the extending direction, that is, from the tip ends of magnetic poles 411a and 412a, in such a manner as to surround portions from base end portions 411b and 412b of rod-shaped bodies 411 and 412 to the middle portion.

Connecting frame-shaped body 413 has a U-shape, and connects rod-shaped bodies 411 and 412 to each other to integrally join a plurality of magnetic poles 411a and 412a. In addition, complementary pole portion 415 is disposed on connecting frame-shaped body 413 between rod-shaped bodies 411 and 412 in parallel with rod-shaped bodies 411 and 412. Note that, when magnetic pole core 41 is assembled to magnetic path core 42, connecting frame-shaped body 413 makes contact with surrounding portion 420 of magnetic path core 42 and forms a magnetic path that, together with surrounding portion 420, surrounds magnetic poles 411a and 412a.

Connecting frame-shaped body 413 includes connecting side portion 4131 with a rectangular parallelepiped shape, and protruding side portions 4132 and 4133 extending from opposite end portions of connecting side portion 4131 in a direction orthogonal to connecting side portion 4131.

Connecting side portion 4131 is disposed to extend in a direction orthogonal to the parallel direction of rod-shaped bodies 411 and 412 and complementary pole portion 415, and are joined orthogonally to base end portions 411b, 412b, and 415b of the rod-shaped bodies and complementary pole portion. Complementary pole portion 415 is joined to a middle portion of connecting side portion 4131, and rod-shaped bodies 411 and 412 are integrally joined to connecting side portion 4131 so as to extend in parallel with complementary pole portion 415 and sandwich complementary pole portion 415. In connecting side portion 4131, rod-shaped bodies 411 and 412 and complementary pole portion 415 are disposed in parallel with protruding side portions 4132 and 4133 between protruding side portions 4132 and 4133 that are joined orthogonally to opposite end portions of the connecting side portion.

Connecting side portion 4131 is disposed and joined to be overlaid with on frame base portion 423 of magnetic path core 42 in the thickness direction (in the extending direction of rotational shaft 24). Protruding side portions 4132 and 4133 are disposed and joined to be overlaid with frame lateral side portions 421 and 422 of magnetic path core 42 in the thickness direction, respectively.

Attachment holes 401 are formed in corner portions formed by connecting side portion 4131 and protruding side portion 4132 and by connecting side portion 4131 and protruding side portion 4132. These corner portions are also two of the four corners of core body K as seen in plan view. Fastening members 32 are inserted in attachment holes 401 for fixing first shaft support 50, magnetic path core 42, and second shaft support 60.

Protruding side portions 4132 and 4133 together with connecting side portion 4131 form, for example, U-shaped connecting frame-shaped body 413, which includes planar magnetic-pole-side contact surface 4130 that is a surface on the magnetic path core 42 side, and that makes surface contact with magnetic-path-side contact surface 4201 of magnetic path core 42. Connecting frame body 413 may have a polygonal frame-shaped body or a circular frame-shaped body which is partly cut out, such as a substantial U-shape turned sideways, a C-shape, or the like.

Magnetic-pole-side contact surface 4130 is disposed entirely on a part of U-shaped connecting frame-shaped body 413 which faces magnetic path core 42. Connecting frame-shaped body 413 is joined to frame base portion 423 while stacked thereon such that magnetic-pole-side contact surface 4130 is brought into surface contact entirely with magnetic-path-side contact surface 4201 of magnetic path core 42.

In addition, connecting side portion 4131 is provided with positioning hole 403 that extends through the connecting side portion in the thickness direction and that is for positioning portions of magnetic path core 42, first shaft support 50, and second shaft support 60 when magnetic path core 42, first shaft support 50, and second shaft support 60 are joined together. Positioning hole 403 communicates with positioning hole 404 in magnetic path core 42.

Complementary pole portion 415 is formed of a magnetic material, and is disposed to face magnet 26 with a predetermined distance in between in a direction orthogonal to the axial direction, as illustrated in FIGS. 2 to 8. Complementary pole portion 415 is disposed to, for example, together with magnetic poles 411a and 412a and rotational angle position holding portion 48, surround magnet 26 in four directions. Complementary pole portion 415 generates a magnetic attraction force (second magnetic attraction force) with magnet 26, thereby moving magnet 26 to a rotation reference position.

Complementary pole portion 415 generates a magnetic attraction force with magnet 26 (specifically, with pole 262), and moves pole 262 different from pole 261 attracted by rotational angle position holding portion 48 in magnet 26. The poles are moved to positions opposite to each other. By this action, complementary pole portion 415 cancels an axis-radial load acting on unit movable part 20 by the magnetic attraction force (first magnetic attraction force) at rotational angle position holding portion 48. Note that "canceling the axis-radial load" also encompasses "configuring to cancel the axis-radial load."

Specifically, complementary pole portion 415 includes complementary pole surface 4150 that is formed integrally with magnetic pole core 41 and that faces magnet 26. It is preferable that complementary pole surface 4150 have a shape corresponding to the outer circumferential surface of magnet 26. It is preferable that complementary pole surface 4150 be disposed to face the outer circumferential surface of magnet 26 with a regular distance (for example, G) therebetween over the entire surface and in a wide range. Particularly preferably, it is preferable that complementary pole surface 4150 be formed to have the same shape area and the same shape as the area and the shape of the surface where magnet 26 facing rotational angle position holding portion 48.

That is, complementary pole portion 415 positions magnet 26 disposed between magnetic poles 411a and 412a to be capable of a reciprocating rotation, to the rotation reference position that is a reference position from which both a forward reciprocating rotation and a backward reciprocating rotation are performed by the same distance when the reciprocating rotation is performed. Complementary pole portion 415, together with magnetic pole surface 49 of rotational angle position holding portion 48, attracts one magnetic pole of the magnetic poles of magnet 26, and positions magnetic pole switching portions 263 and 264 being boundaries of the different poles in the outer circumferential portion of magnet 26 to positions facing magnetic poles 411a and 412a.

Complementary pole portion 415 is disposed to extend from connecting side portion 4131 in parallel with rod-shaped bodies 411 and 412.

Complementary pole portion 415 is configured to have the length in the thickness direction that is the same as the length of rod-shaped bodies 411 and 412, that is, the length of magnetic poles 411a and 412a, and the length of the complementary pole portion in the thickness direction is longer than the length of magnet 26 in the axial direction.

Further, complementary pole portion 415 is disposed between rod-shaped bodies 411 and 412, and complementary pole surface 4150 is formed in an arc shape curved in the circumferential direction between magnetic poles 411a and 412a.

In the present embodiment, magnetic poles 411a and 412a are two poles and magnet 26 also has two poles. Thus, complementary pole surface 4150 of complementary pole portion 415 serving as a magnetic pole is disposed at a position opposite to magnetic pole surface 49 of rotational angle position holding portion 48.

Complementary pole portion 415 includes intervals between the complementary pole portion and rod-shaped bodies 411 and 412 in which the circumferential walls of bobbins 46 and 47 are disposed.

Since complementary pole portion 415 is disposed integrally with magnetic path core 42, it is possible to form complementary pole portion 415 firmly and with high positional accuracy together with magnetic poles 411a and 412a. As a result, durability against a load caused by a magnetic attraction force generated by magnet 26 is obtained. Further, complementary pole portion 415 being integral with magnetic pole core 41 has high placement position accuracy. The complementary pole portion generates a suitable magnetic attraction force with little variation. The complementary pole portion can cancel the axis-radial load caused on unit movable part 20 due to the magnetic attraction force of rotational angle position holding portion 48.

In addition, complementary pole portion 415 is disposed in core body K to surround magnet 26 together with rotational angle position holding portion 48. Accordingly, a minimum space layout is achieved. Thus, it is possible to realize rotary reciprocating drive actuator 1 which is more miniaturized.

In magnetic pole core 41, rod-shaped bodies 411 and 412, connecting frame-shaped body 413, and complementary pole portion 415 have an integrated structure. Accordingly, when rotary reciprocating drive actuator 1 is assembled, the positional relationship between the plurality of magnetic poles 411a and 412a and the positional relationship between complementary pole portion 415 and magnetic poles 411a and 412a do not change.

That is, in magnetic pole core 41 together with magnetic path core 42 as a core body of core assembly 40, magnetic poles 411a and 412a are disposed at positions facing magnet 26. The magnetic pole core and the magnetic path core are disposed as unit fixing part 30. With this configuration, magnetic poles 411a and 412a can be positioned at the accurate positions opposite to each other without being displaced from each other.

<Magnetic Path Core 42>

Magnetic path core 42 is joined to magnetic pole core 41, and forms a magnetic path via which magnetic flux passes through magnetic poles 411a and 412a when coils 44 and 45 are energized. During a de-energization period, magnetic path core 42 forms, together with magnetic pole core 41 and magnet 26, a magnetic path along which a magnetic flux passes through rotational angle position holding portion 48 and complementary pole portion 415.

Magnetic path core 42 faces connecting frame-shaped body 413 of magnetic pole core 41 in the extending direction of rotational shaft 24 while making contact with the connecting frame-shaped body, and is assembled to magnetic pole core 41, with a plurality of magnetic poles 411a and 412a being positioned around rotational shaft 24.

Magnetic path core 42 includes magnetic-path-side contact surface 4201, cutout portion 4202, engagement recesses 402, and positioning hole 404 in addition to surrounding portion 420.

Magnetic path core 42 surrounds coils 44 and 45 by surrounding portion 420. Cutout portion 4202 being a part of surrounding portion 420 is engaged with connecting frame-shaped body 413 of magnetic pole core 41. The magnetic path core is thus connected to the magnetic pole core.

Surrounding portion 420 is disposed to surround magnetic poles 411a and 412a and rotational shaft 24 in addition to coils 44 and 45.

Surrounding portion 420 is formed in a rectangular frame shape, for example, and has a high strength. When connecting frame-shaped body 413 is engaged with surrounding portion 420, magnetic-path-side contact surface 4201 of magnetic path core 42 comes into tight surface contact with magnetic-pole-side contact surface 4130 of magnetic pole core 41. As core body K, an integrated rectangular frame-shaped body entirely having the same thickness (length in the axial direction) is formed.

Specifically, surrounding portion 420 is formed by frame base portion 423, both of frame lateral side portions 421 and 422, and bridge portion 427 joined to one another in a rectangular frame shape. In surrounding portion 420, cutout portion 4202 is formed by cutting out portions of frame base portion 423 and opposite frame lateral side portions 421 and 422 on the opposing surface side facing magnetic pole core 41.

Magnetic-path-side contact surface 4201 has a shape corresponding to connecting frame-shaped body 413, e.g., a U-shape, and is disposed on a bottom surface portion of cutout portion 4202, that is, on a part of the surfaces of frame base portion 423 and opposite frame lateral side portions 421 and 422 on the magnetic pole core 41 side. Magnetic-path-side contact surface 4201 makes surface contact with magnetic-pole-side contact surface 4130 of connecting frame-shaped body 413 to be overlaid with the magnetic-pole-side contact surface over the entire surface. Thus, the magnetoresistance at a joint portion between surrounding portion 420 and connecting frame-shaped body 413 can be reduced. Note that magnetic-path-side contact surface 4201 may have a shape corresponding to connecting frame-shaped body 413, and magnetic-path-side contact surface 4201 may have a polygonal frame-shaped body or a circular frame-shaped body which is partly cut out, such as a substantial U-shape turned sideways, a C-shape, or the like corresponding to connecting frame-shaped body 413.

Frame lateral side portions 421 and 422 are joined to protruding side portions 4132 and 4133 to be overlaid therewith in the axial direction. Frame lateral side portions 421 and 422 are disposed to sandwich a pair of rod-shaped bodies 411 and 412 and extend along the parallel direction of the pair of rod-shaped bodies 411 and 412. Frame lateral side portions 421 and 422 are, at base end portions 421b and 422b, joined to the opposite end portions of frame base portion 423. Frame lateral side portions 421 and 422 are one examples of a pair of leg portions in core body K. Between the tip end portions of frame lateral side portions 421 and 422, bridge portion 427 parallel to frame base portion 423 is provided.

In a state where frame base portion 423 is stacked to make contact with and be overlaid with connecting frame-shaped body 413, the base end surfaces of the plurality of rod-shaped bodies 411 and 412 protruding from the connecting frame-shaped body 413 side into frame base portion 423 make contact with the inside surface of frame base portion 423. As a result, frame base portion 423 and connecting frame-shaped body 413 are joined to rod-shaped bodies 411 and 412 while making surface contact with each other. Thus, the magnetic flux easily passes between them.

Engagement recesses 402 are formed in the four corners of surrounding portion 420, that is, respectively in bent portions of the corner portions of the rectangular frame-shaped magnetic path to extend in the axial direction. Attachment leg portions 56 of first shaft support 50 are fitted to engagement recesses 402 (see FIGS. 2 to 5).

Bridge portion 427 forms an upper frame portion of surrounding portion 420 forming the magnetic path connecting between magnetic poles 411a and 412a. Bridge portion 427 is disposed in parallel with frame base portion 423 between the tip end portions of frame lateral side portions 421 and 422, and is also connected to the tip end portions of protruding side portions 4132 and 4133 of magnetic pole core 41 in a state of being disposed.

Attachment holes 401 communicating with engagement recesses 402 are formed in the opposite end portions of bridge portion 427. Further, bridge portion 427 includes positioning hole 405 extending through the bridge portion in the axial direction.

<Rotational Angle Position Holding Portion (One Example of First Magnetic Attraction Member) 48>

Rotational angle position holding portion 48 is disposed such that magnetic pole surface 49 faces magnet 26 via air gap G. Magnetic pole surface 49 is formed in an arc shape corresponding to the outer circumferential surface of magnet 26. Rotational angle position holding portion 48 attracts magnet 26 by the magnetic attraction force (first magnetic attraction force) generated between the rotational angle position holding portion and magnet 26 (more specifically, pole 261) such that the magnet is displaced around rotational shaft 24 to be positioned at the rotation reference position.

The rotation reference position is a rotational center position of the reciprocating rotation of magnet 26, and is a position from which movement and displacement are possible at the same angle when magnet 26 performs a reciprocating rotation about rotational shaft 24 to move in one direction around the axis and in a direction opposite to the one direction.

Rotational angle position holding portion 48 may be a magnet or a magnetic material (particularly preferably a ferromagnetic material).

Rotational angle position holding portion 48 forms a magnetic spring by generating a magnetic attraction force between one pole 261 of magnet 26 and the rotational angle position holding portion. One pole 261 of magnet 26 is positioned at a position facing rotational angle position holding portion 48.

In a normal state in which coils 44 and 45 are not energized (in a de-energization period), rotational angle position holding portion 48 is attracted by the magnetic spring to the pole of magnet 26 which is closer to the rotational angle position holding portion and whose area to be faced by the rotational angle position holding portion is larger than that of magnetic poles 411a and 412a. Accordingly, magnet 26 is held at the rotation reference position. Note that, due to the magnetic attraction force between rotational angle position holding portion 48 and pole 261, a load is generated in unit movable part 20 in the axis-radial direction (first axis-radial direction) from the center of rotational shaft 24 toward rotational angle position holding portion 48. As described above, in the present embodiment, by the magnetic attraction force between complementary pole portion 415 and pole 262 disposed on the side of the center of rotational shaft 24 opposite to rotational angle position holding portion 48, a load is generated in unit movable part 20 also in the axis-radial direction from the center of rotational shaft 24 toward complementary pole portion 415 (second axis-radial direction),. By equalizing the loads in both of the directions to cancel the loads of each other, it is possible to suppress an undesired load from being applied to a portion in contact with rotational shaft 24, such as first bearing 54 and second bearing 64.

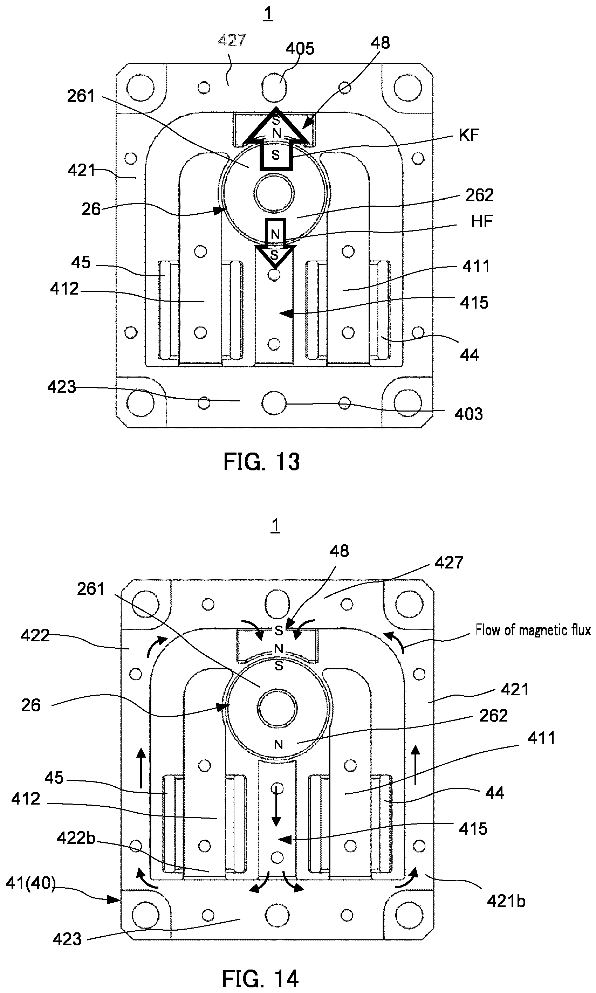

In core assembly 40, rotational angle position holding portion 48 is formed from a magnet. In this configuration, for example, rotational angle position holding portion 48 is disposed such that the same pole as pole 262 different from pole (one pole) 261 of magnet 26 of unit movable part 20 to be attracted faces magnet 26 positioned at the rotation reference position, at an intermediate position between magnetic poles 411a and 412a. It is desirable that rotational angle position holding portion 48 be disposed such that the pole facing the pole of magnet 26 in the rotation reference position attracts the pole of the magnet, and the shape of the poles have shapes corresponding to each other. For example, when pole 261 is an S pole and pole 262 is an N pole (see FIGS. 13 and 14), the arc-shaped magnetic pole surface of rotational angle position holding portion 48 facing pole 261 of magnet 26 is an N pole.

Rotational angle position holding portion 48 is disposed in unit fixing part 30, particularly, in core assembly 40. Rotational angle position holding part 48 is disposed between bridge portion 427 and magnet 26. In the present embodiment, rotational angle position holding portion 48 is attached to bridge portion 427 of magnetic path core 42 (the upper portions of rod-shaped bodies 411 and 412 of magnetic pole core 41) in an attitude such that the magnetic poles face magnet 26. Note that, rotational angle position holding portion 48 does not have to be a magnet, and may be formed by a magnetic material that generates a magnetic attraction force between the magnetic material and magnet 26.

Positioning holes 404 and 405 are holes used for positioning respective parts (first shaft support 50, core assembly 40, and second shaft support 60) constituting unit fixing part 30. As illustrated in FIGS. 3 and 4, positioning hole 404 is formed to have a coaxial center with and have the same diameter as positioning hole 403 in magnetic pole core 41, positioning hole 501 in first shaft support 50, positioning hole 601 in second shaft support 60. Positioning holes 403, 404, 501, and 601 form an axially continuous positioning through hole.

Positioning hole 405, positioning hole 502 in first shaft support 50, and positioning holes 602 in second shaft support 60 are coaxially formed and have the same diameter, and a continuous positioning through hole in the axial direction is formed. Positioning hole 405 in magnetic path core 42, positioning hole 502 in first shaft support 50, and positioning hole 602 in second shaft support 60 are, for example, elongated holes, which are formed to extend through unit fixing part 30 in the axial direction.

With this configuration, when joining core assembly 40, first shaft support 50 and second shaft support 60 to one another, positioning holes 403, 404, 501, and 601 are disposed to continue in the axial direction and a rod for positioning is inserted therein. In addition, positioning holes 405, 502, and 602 are disposed to be continuous in the axial direction to form the elongated through hole, and a positioning rod is inserted therethrough.

In this manner, core assembly 40 is sandwiched between first shaft support 50 and second shaft support 60 in a state where these are positioned. Then, fastening members 32 are secured by inserting it, for example, from the second shaft support 60 side in fastening holes 603 in second shaft support 60, attachment holes 401 in core assembly 40, and fastening holes 503 in first shaft support 50 in this order. (For example, screws as fastening members 32 are screwed). Thus, first shaft support 50 and second shaft support 60 are fixed to core assembly 40, with core assembly 40 being sandwiched therebetween.

In this manner, positioning holes 403, 404, 501, and 601 and positioning holes 405, 502, and 602 function as common positioning holes. Rods can be inserted into these common positioning through holes, and positioning each part during assembly can be performed with reference to the rods. Thereafter, rotary reciprocating drive actuator 1 is assembled. It is thus possible to improve the assembly accuracy. It is possible to suppress a decrease in reciprocating rotation performance, and to suppress the occurrence of variations in reciprocating rotation output.

In the assembled state of rotary reciprocating drive actuator 1, rotational shaft 24 is inserted into a space surrounded by magnetic poles 411a and 412a. Magnet 26 attached to rotational shaft 24 is located in this space, and magnetic poles 411a and 412a face magnet 26 at accurate positions via air gap G.

Coils 44 and 45 are wound around cylindrical bobbins 46 and 47. Coil bodies composed of coils 44 and 45 and bobbins 46 and 47 are externally fitted to rod-shaped bodies 411 and 412 of magnetic pole core 41. Thus, coils 44 and 45 are disposed to be wound around rod-shaped bodies 411 and 412. Thus, coils 44 and 45 are disposed adjacently to magnetic poles 411a and 412a located at the tip end portions of rod-shaped bodies 411 and 412.

The winding directions of coils 44 and 45 are set such that a magnetic flux is appropriately generated from one of magnetic poles 411a and 412a of magnetic pole core 41 toward the other when energization is performed.

<Modification 1>

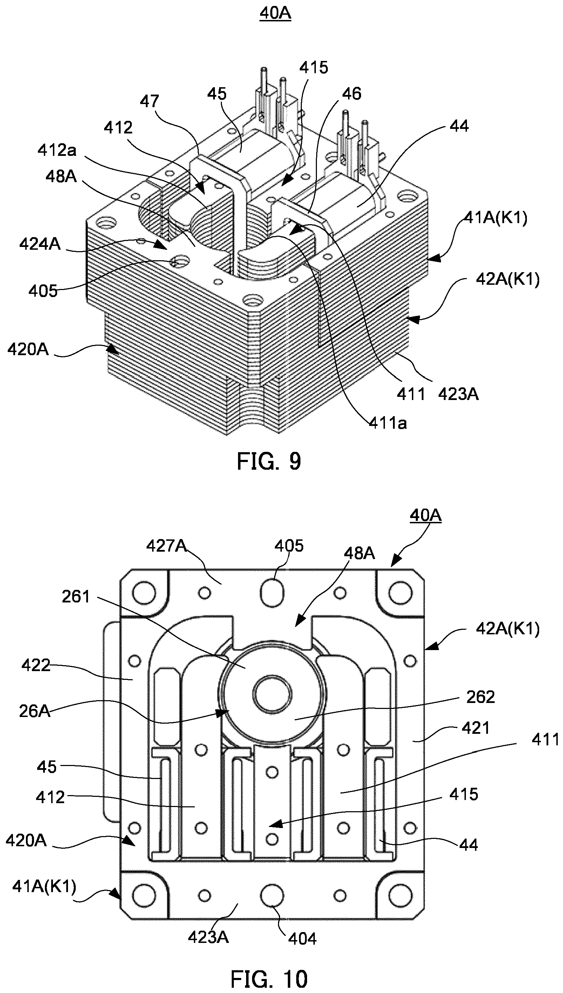

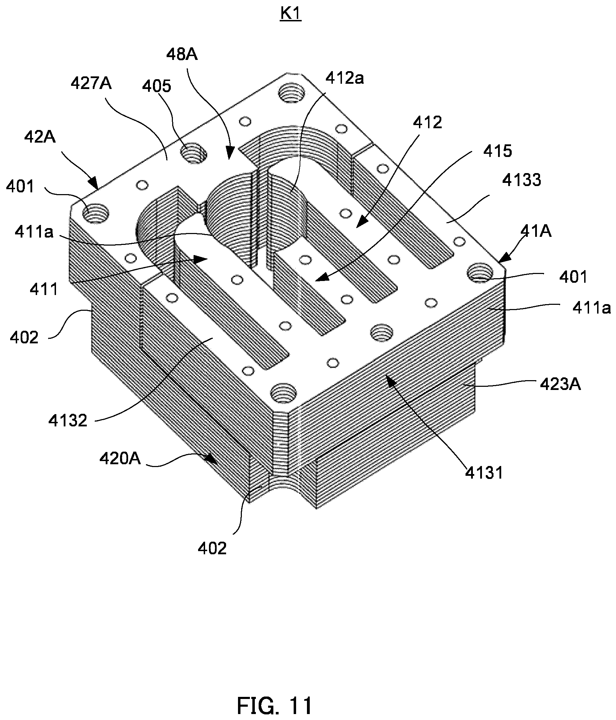

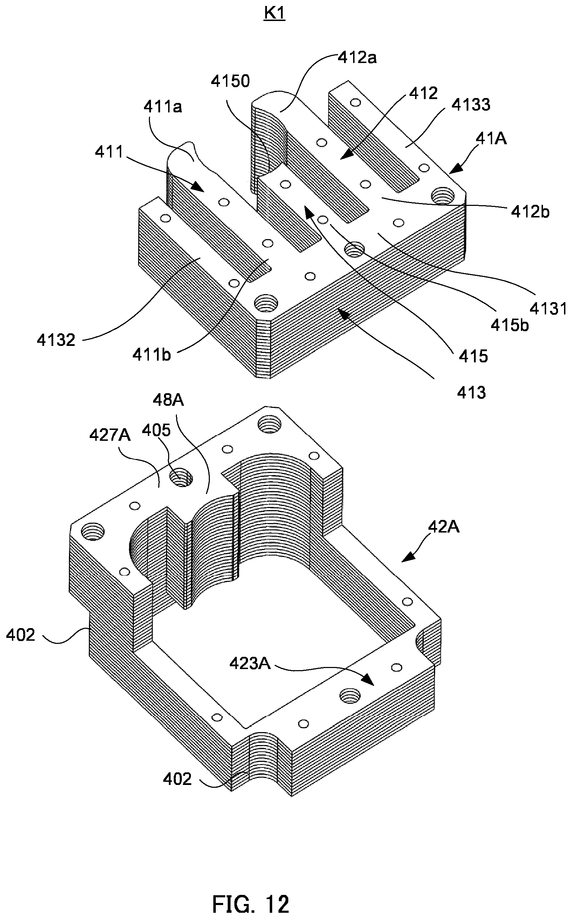

FIG. 9 is a bottom-surface-side perspective view of Modification 1 of the core assembly, FIG. 10 is a plan sectional view illustrating a principal part configuration of Modification 1 of the core assembly, FIG. 11 is a bottom-surface-side perspective view of the core body in Modification 1 of the core assembly, and FIG. 12 is an exploded view of the core body.

Core assembly 40A as Modification 1 illustrated in FIGS. 9 to 12 differs from core assembly 40 in that rotational angle position holding portion 48 is made of a magnetic material and is integrated with magnetic path core 42A. Therefore, the same constituent elements as those in Embodiment 1 are denoted by the same reference numerals, and description thereof will be omitted, and constituent elements similar to those in Embodiment 1 but having different features will be appropriately described while adding letter "A" to reference numerals as appropriate.

Core assembly 40A is employed in rotary reciprocating drive actuator 1, for example, instead of core assembly 40. Core assembly 40A together with magnet 26 (see FIGS. 3 to 5) forms a magnetic circuit. Core assembly 40A includes coils 44 and 45, core body K1 around which coils 44 and 45 are wound, and rotational angle position holding portion 48A.

Core assembly 40A (specifically, core body K1) includes magnetic pole core 41A that is configured similarly to magnetic pole core 41, and magnetic path core 42A that is combined with magnetic pole core 41A to form core body K1.

Magnetic pole core 41A integrally includes rod-shaped bodies 411 and 412 having a plurality of magnetic poles 411a and 412a, complementary pole portion 415, and connecting frame-shaped body 413.

Magnetic path core 42A integrally includes bridge portion 427A of surrounding portion 420A being a magnetic material, and rotational angle position holding portion 48A being a magnetic material. In other respects, the magnetic path core is configured the same as magnetic path core 42, and has the same function. Surrounding portion 420A includes frame base portion 423A, opposite frame lateral side portions 421 and 422, and bridge portion 427A.

As described above, a magnetic material is used for rotational angle position holding portion 48A. The rotational angle position holding portion is formed as a part of core body K1, specifically, as a part of magnetic path core 42A. Accordingly, it is possible to reduce the man-hours and reduce the component cost as compared with the case where rotational angle position holding portion 48A is formed separately from the core body.

<Shaft Support (First Shaft Support 50 and Second Shaft Support 60)>

First shaft support 50 and second shaft support 60 illustrated in FIGS. 2 to 4 function as an electromagnetic shield, support rotational shaft 24 such that the rotational shaft is rotatable, sandwiches core assembly 40, and are fixed to core assembly 40.

First shaft support 50 and second shaft support 60 are disposed on opposite sides of core body K of core assembly 40 in the axial direction. First shaft support 50 and second shaft support 60 make it possible to suppress incidence of noise into the inside of core body K from the outside and emission of noise from core body K to the outside. Note that, positioning recessed portions 15 functioning for positioning during mounting rotary reciprocating drive actuator 1 itself in a product are formed in the side surfaces of first shaft support 50 and second shaft support 60, respectively. With this configuration, for example, engaging portions disposed at mounting positions of the product are engaged with positioning recessed portions 15. It is thus possible to perform positioning of rotary reciprocating drive actuator 1.

First shaft support 50 and second shaft support 60 include support body portions 52 and 62 in which through holes 521 and 621 are formed, and bearings (first bearing 54 and second bearing 64) to be fitted into through holes 521 and 621.

Support body portions 52 and 62 are made of an electrically conductive material, and cover core assembly 40, specifically, the end faces of core body K spaced apart from each other in the axial direction, respectively. It is preferable that support body portions 52 and 62 of first shaft support 50 and second shaft support 60 be formed of, for example, an aluminum alloy. The aluminum alloy has a high degree of freedom in design, and makes it possible to easily impart desired rigidity. Therefore, the aluminum alloy is preferable when first shaft support 50 and second shaft support 60 function as bearing supports for receiving and supporting rotational shaft 24.

<First Shaft Support 50>

First shaft support 50 is attached to core assembly 40 so as to cover core assembly 40 from the one end portion side of rotational shaft 24.

First bearing 54 of first shaft support 50 fits into through hole 521 in support body portion 52. Rotational shaft 24 is inserted through first bearing 54 rotatably. First shaft support 50 supports rotational shaft 24 such that the rotational shaft is capable of a reciprocating rotation via first bearing 54 in a state where one end portion side of the rotational shaft protrudes. Note that bearing attachment portion 5211 is formed on the rear surface side (the core assembly 40 side) of through hole 521.

First bearing 54 is fitted from the core assembly 40 side (rear surface side) to bearing attachment portion 5211 in the rear surface. Accordingly, a flange portion of first bearing 54 is engaged with an opening edge portion of through hole 521. Thus, the first bearing is fitted to through hole 521 in a state where the movement in the fitting direction is restricted. Bearing attachment portion 5211 is formed into a recessed shape continuous to through hole 521, for example, in the back surface of first shaft support 50, and first bearing 54 is fitted into this recessed shape. Note that, first bearing 54 is, for example, composed of a rolling bearing or a plain bearing.

First shaft support 50 includes positioning holes 501 and 502, attachment leg portions 56, and core holding portion 58 protruding from support body portion 52 to the inside of core assembly 40.

Core holding portions 58 are interposed between magnetic poles 411a and 412a, frame lateral side portions 421 and 422, and protruding side portions 4132 and 4133 forming the magnetic paths. Core holding portion 58 can prevent magnetic poles 411a and 412a from moving with respect to frame lateral side portions 421 and 422 and protruding side portions 4132 and 4133, and can hold the magnetic poles at their positions.

Therefore, it is possible to suppress deformation or the like due to impact and vibration of core body K in core assembly 40. Core holding portions 58 only need to be interposed between magnetic poles 411a and 412a and each of the opposite lateral side portions of the large surrounding portion formed from frame lateral side portions 421 and 422 and protruding side portions 4132 and 4133 which are integrated with one another.

Positioning holes 501 and 502 are formed in support body portion 52, respectively, at middle portions of the opposite side portions to extend therethrough in the axial direction.

Attachment leg portions 56 are disposed to protrude from the four corners of the rear surface side of support body portion 52. Attachment leg portions 56 are used to join first shaft support 50, second shaft support 60, and core assembly 40 together.

The shape of each of attachment leg portions 56, for example, corresponds to the shape of engagement recess 402 in core body K. Fastening holes 503 extending through in the axial direction are formed in attachment leg portions 56, respectively.

In unit fixing part 30 having a rectangular columnar shape including a cubic shape, a rectangular parallelepiped shape, or the like, for example, having a cubic shape, attachment leg portions 56 are disposed on the side portions at the four corners extending along the axial direction of rotational shaft 24. The attachment leg portions are engaged with engagement recesses 402 in core assembly 40. In this engaged state, first shaft support 50 is fixed to second shaft support 60 by fastening the first shaft support to second shaft support 60 by inserting, through corresponding attachment holes 401 at the four corners of core assembly 40, fastening members 32 inserted into fastening holes 503 in attachment leg portions 56.

As a result, first shaft support 50 restricts core body K, and thus core assembly 40, such that the core body moves only in the axial direction away from first shaft support 50. The core body is fixed to core assembly 40A and second shaft support 60 such that movement in the axial direction is also restricted by fastening members 32. That is, first shaft support 50 and core assembly 40 are restricted from moving in a direction intersecting the axial direction of rotational shaft 24, and are securely integrally attached.

<Second Shaft Support 60>

Second shaft support 60 is attached to core assembly 40 so as to cover core assembly 40 from the other end portion side of rotational shaft 24.

Second bearing 64 of second shaft support 60 is fitted into through hole 621 in support body portion 62, and rotational shaft 24 is rotatably inserted into second bearing 64. Second shaft support 60 supports rotational shaft 24 such that the rotational shaft is capable of a reciprocating rotation via second bearing 64 in a state in which the other end portion side of the rotational shaft protrudes. Note that bearing attachment portion 6211 is formed on the rear surface side (the core assembly 40 side) of through hole 621.

Second bearing 64 is fitted in bearing attachment portion 6211 from the core assembly 40 side. The second bearing is fitted in through hole 621 such that the flange portion of second bearing 64 is engaged with the opening edge portion of through hole 621 and the movement in the fitting direction is restricted. Bearing attachment portion 6211 is formed, for example, in the back surface of second shaft support 60 in a recessed shape continuous to through hole 621. Second bearing 64 is fitted into this recessed shape. Note that, second bearing 64, for example, is formed by a rolling bearing, but may also be formed by a bearing such as a plain bearing.

Second shaft support 60, together with first shaft support 50, forms core assembly 40 via fastening members 32, and includes fastening holes 603 used as a fastening portion together with fastening members 32.

Fastening holes 603 are formed in support body portion 62 at positions corresponding to fastening holes 503 in first shaft support 50 and attachment holes 401 in core assembly 40, i.e., positions facing the holes in the axial direction. Hole formation in support body portion 62 is at four corners, and is performed such that fastening members 32 are inserted, and portions (here the flange portions of head portions) of fastening members 32 are engaged with the holes. Note that, when fastening members 32 are screws or the like, recessed portions for screw heads (the head portions of fastening members 32) to retract therein are formed in support body portion 62. Fastening holes 603 are disposed in the recessed portions. Thus, in support body portion 62, even when shafts of fastening members 32 such as bolts or screws are inserted through fastening holes 603 and the head portions of fastening members 32 are engaged with peripheries of fastening holes 603, the head portions of fastening members 32 are retracted and never protrude outward.

As is understood, first shaft support 50 and second shaft support 60 sandwich, via fastening members 32, core assembly 40 having core body K composed of magnetic pole core 41 and magnetic path core 42, and are fixed to core assembly 40 to be integrated as unit fixing part 30 of driving unit 10.

<Unit Movable Part 20>

Magnet 26 is a ring-type magnet in which pole 261 (hereinafter, also referred to as "S pole 261" for convenience) and pole 262 (hereinafter, also referred to as "N pole 262" for convenience) are alternately disposed in the circumferential direction. Magnet 26 is attached to the circumferential surface of rotational shaft 24 so as to be located in a space surrounded by magnetic poles 411a and 412a of core body K after rotary reciprocating drive actuator 1 is assembled. When coils 44 and 45 are energized, rod-shaped bodies 411 and 412 and magnetic path core 42 are magnetically excited to generate polarities corresponding to the energization directions in magnetic poles 411a and 412a, and a magnetic force (attraction force and repulsion force) is generated between magnetic poles 411a and 412a and magnet 26.

In the present embodiment, magnet 26 is magnetized to different polarities changed at a plane along the axial direction of rotational shaft 24 serving as a boundary. That is, magnet 26 is a two-pole magnet magnetized so as to be equally divided into S pole 261 and N pole 262. The number of magnetic poles of magnet 26 (two in the present embodiment) is equal to the number of magnetic poles 411a and 412a of core body K. Note that, magnet 26 may be magnetized to have two or more poles depending on the amplitude at the time of movement. In this case, magnetic pole portions of core body K are disposed correspondingly to the magnetic poles of magnet 26.

Further, as illustrated in FIGS. 2 to 4, magnet 26 is disposed between bearing 54 of first shaft support 50 and bearing 64 of second shaft support 60 and between annular spacer 25 and preload spring 27.

A portion of rotational shaft 24 on the other end portion side that is inserted through second bearing 64 and that protrudes outward of core assembly 40 is provided with shaft support ring 28 such that the shaft support ring protrudes in the radial direction. Specifically, shaft support ring 28 is attached by being fitted into cutout 246 formed in rotational shaft 24, and is adjacent to second bearing 64 at the other end side of rotational shaft 24.

When rotational shaft 24 is attached to unit fixing part 30, magnet 26 is disposed in unit fixing part 30 on the other end portion side of rotational shaft 24 in the axial direction, via spacer 25 interposed between the magnet and second bearing 64. In addition, at one end portion side of rotational shaft 24 between the magnet and first bearing 54, magnet 26 is disposed in a state in which preload is applied to the magnet on the spacer side via preload spring 27 sandwiched by washers 27a.

Thus, magnet 26 is disposed in a state of being positioned in unit fixing part 30. In this state, when an external force is applied to preload spring 27 in a compressive direction of preload spring 27, shaft support ring 28 restricts the movement of rotational shaft 24 and magnet 26 in a thrust direction (e.g., on the upper side in FIG. 2) with respect to unit fixing part 30. Therefore, in particular, a part (such as encoder disk 74) of angle sensor part 70 disposed on the other end portion side of rotational shaft 24 does not move with rotational shaft 24, and thus does not collide with another part, for example, with second bearing 64. Thus, the parts are not damaged.

As illustrated in FIG. 5, the polarity of magnet 26 is switched at magnetic pole switching portions 263 and 264 which are boundary portions between S pole 261 and N pole 262.

When magnet 26 is held in the rotation reference position by the magnetic attraction force between the magnet and rotational angle position holding portion 48, the outer circumferential end portions of magnetic pole switching portions 263 and 264 of magnet 26 face magnetic poles 411a and 412a of rod-shaped bodies 411 and 412.

At this time, magnetic pole switching portions 263 and 264 which are the boundary portions are disposed so as to extend in a direction orthogonal to magnetic poles 411a and 412a. Further, with reference to the state in which pole 261 of magnet 26 is in the rotation reference position, the attachment attitude of mirror part 22 is adjusted.

When magnet 26 is positioned at the rotation reference position, magnetic pole switching portions 263 and 264 of magnet 26 face magnetic poles 411a and 412a. When coils 44 and 45 are energized in this state, unit fixing part 30 can generate the maximum torque to stably drive the movable body.

Further, by configuring magnet 26 with a two-pole magnet, it becomes easier to drive a reciprocating rotation of a movable object at a high amplitude in cooperation with core body K, and it is also possible to improve the driving performance. Note that the embodiment has been described in connection with the case where magnet 26 has a pair of magnetic pole switching portions 263 and 264, two or more pairs of magnetic pole switching portions may be included. In this case, a configuration having magnetic poles 411a and 412a corresponding in number to this configuration is employed. Rotational angle position holding portion 48 and complementary pole portion 415 are disposed between magnetic poles 411a and 412a.

<Angle Sensor Part 70>

Angle sensor part 70 illustrated in FIGS. 1, 3, and 4 is attached to the outer surface side of second shaft support 60 between second shaft support 60 and rotational shaft 24.

Angle sensor part 70 includes circuit board 71, optical sensor 73 mounted on circuit board 71, and encoder disk 74, and sensor attachment portion 78. Circuit board 71 is fixed within sensor attachment portion 78 by fastening members 33. Sensor attachment portion 78 has a case shape and also functions as a cover that covers optical sensor 73. Sensor attachment portion 78 is fixed to support body portion 62 of second shaft support 60 by fastening members 34. Sensor attachment portion 78 covers optical sensor 73. Thus, entry of impurities such as dust into optical sensor 73 can be prevented. In addition, interference by light can be prevented, and stable detection can be performed.

Encoder disk 74 has an annular shape, is fixedly attached to the other end portion of rotational shaft 24 via a cylindrical portion of an inner circumferential portion, and rotates integrally with magnet 26 and mirror part 22. Encoder disk 74 is disposed such that the rotation position of encoder disk 74 is the same as the rotation position of rotational shaft 24. Optical sensor 73 emits light to encoder disk 74 and detects the rotation position (angle) of encoder disk 74 based on the reflected light. Thus, it is possible to detect the rotation positions of magnet 26 and mirror part 22 by optical sensor 73.

Angle sensor part 70 is capable of detecting the rotational angle of the movable body including magnet 26 and rotational shaft 24, and controls the rotational angle position and the rotation speed of a movable object during driving, specifically, mirror part 22 being an object to be moved.

Optical sensor 73 of angle sensor part 70 is attached to sensor attachment portion 78 attached to second shaft support 60. Only by removal of sensor attachment portion 78 from second shaft support 60, optical sensor 73 can be easily removed. Note that, board 79 for a driving power supply of rotary reciprocating drive actuator 1 is attached to sensor attachment portion 78. Coils 44 and 45 are connected to board 79 and the board supplies power to coils 44 and 45.

Thus, it becomes easy to replace angle sensor part 70 when any failure is caused in angle sensor part 70. Further, attachment of angle sensor part 70 at the final stage of assembly becomes possible. As a result, it is possible to attach expensive angle sensor part 70 after confirming that the assembly of the other parts is successful. It is thus possible to reduce the risk such as wasting expensive angle sensor part 70, in particular, optical sensor 73 because of assembly failure of other components. Further, even when the actuator has a failure after attachment, it is possible to immediately remove optical sensor 73 by removing sensor attachment portion 78.

An end portion of rotational shaft 24 opposite to the one end portion to which mirror part 22 is connected is disposed to protrude from sensor attachment portion 78. Stopper portion 75 for restricting the rotation of rotational shaft 24 is disposed on the end portion. Stopper portion 75 is provided with protrusion 76 protruding in the radial direction. Restricting portions 77 are disposed on the outer surface of sensor attachment portion 78 within the rotation range of protrusion 76 as illustrated in FIG. 4.

When stopper portion 75 rotates, protrusion 76 swings, and protrusion 76 abuts against restricting portion 77, so that the rotation range thereof is restricted. Thus, the maximum rotational angle of rotational shaft 24 is limited, it is possible to prevent interference with other components, and it is possible to prevent deformation and damage due to interference.

<Operation of Rotary reciprocating drive actuator 1>

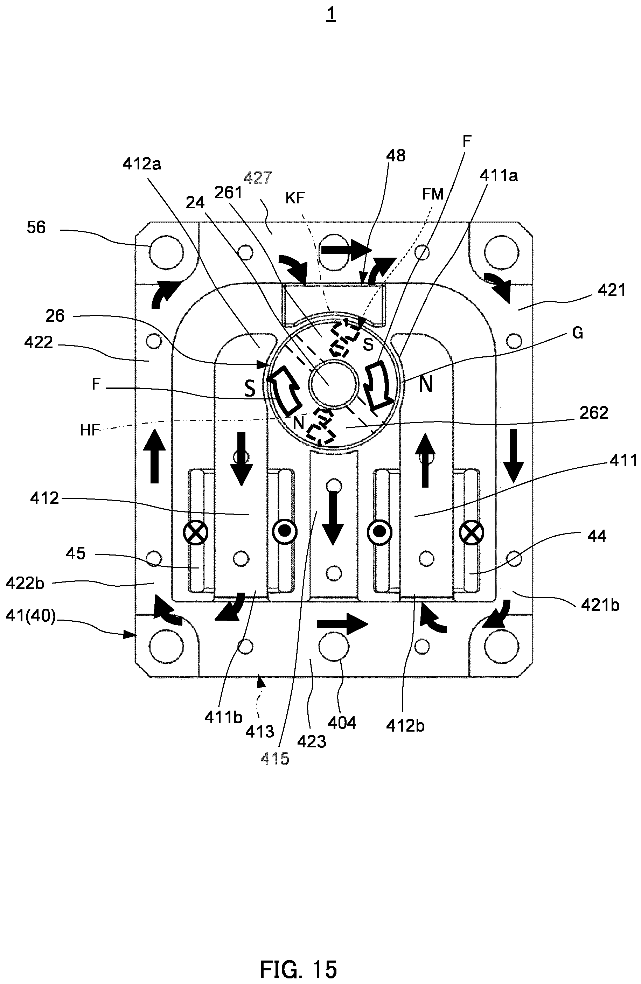

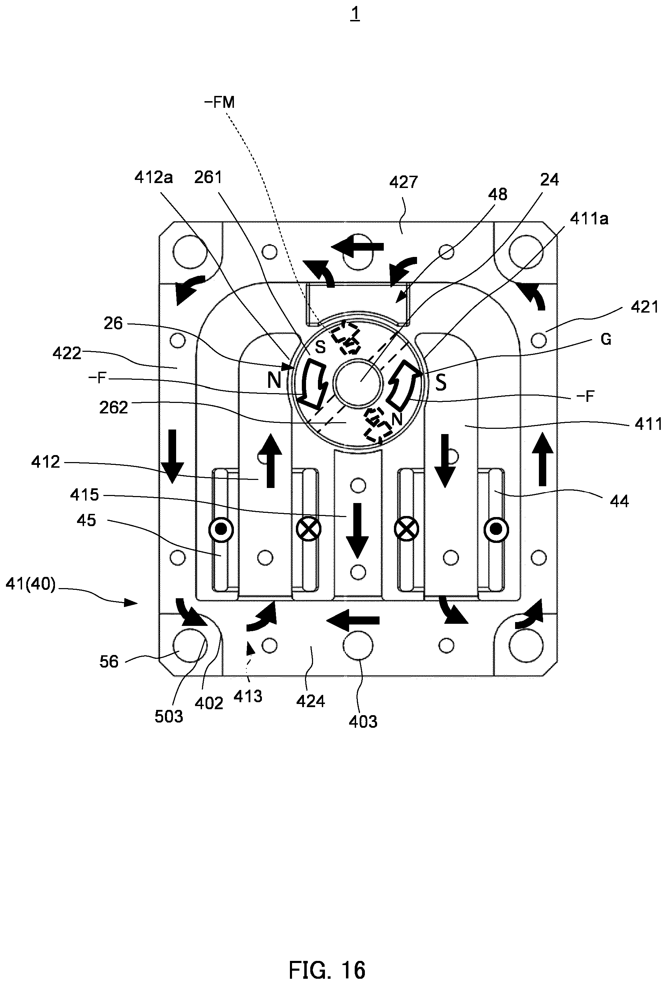

Next, the operation of rotary reciprocating drive actuator 1 will be described with reference to FIGS. 5 and 13 to 16. FIG. 13 is an explanatory view of the magnetic circuit when the rotary reciprocating drive actuator of Embodiment 1 is not energized, and FIG. 14 is an explanatory view of the magnetic attraction force of the rotary reciprocating drive actuator of Embodiment 1. FIGS. 15 and 16 are explanatory views of the magnetic circuit when the rotary reciprocating drive actuator of Embodiment 1 is energized.

Two magnetic poles 411a and 412a of core body K of core assembly 40 are disposed so as to sandwich magnet 26 with air gap G therebetween. During the de-energization period of coils 44 and 45, as illustrated in FIG. 13, magnet 26 is held at the rotation reference position by magnetic attraction force (first magnetic attraction force) KF generated between the magnet and rotational angle position holding portion 48 and by magnetic attraction force (second magnetic attraction force) HF generated between the magnet and complementary pole portion 415.

Specifically, one of S pole 261 and N pole 262 of magnet 26 (S pole 261 in FIG. 13) is attracted by the N pole of rotational angle position holding portion 48, and magnet 26 is positioned at the rotation reference position. Magnetic attraction force KF between rotational angle position holding portion 48 and magnet 26 generates torque (also referred to as "holding torque") for rotating magnet 26 so as to position magnet 26 at the rotation reference position, that is, to position pole 261 at the rotation reference position.

By this holding torque, a load (axis-radial load) in the axis-radial direction is applied to rotational shaft 24 toward the rotational angle position holding portion 48 side via magnet 26. In particular, as the holding torque increases, the load in the axis-radial direction increases. As a result, bearings 54 and 64 (first bearing 54 and second bearing 64) supporting rotational shaft 24 are pressed, and a frictional force between the rotational shaft and bearings 54 and 64 (first bearing 54 and second bearing 64) increases. Accordingly, loss torque increases, and in some cases, desired driving cannot be performed.

In the present embodiment, complementary pole portion 415 is disposed. Complementary pole portion 415 is attracted to pole 262 by magnetic attraction force HF between the complementary pole portion and the other pole (N pole 262 in FIG. 13) of the poles of magnet 26. As a result, similarly to magnetic attraction force KF, holding torque is generated in magnet 26 by magnetic attraction force HF, magnet 26 rotates in the circumferential direction, and other pole 262 of magnet 26 is displaced to a position facing complementary pole portion 415. At this time, magnetic attraction force HF acts in the same circumferential direction as magnetic attraction force KF, and acts in the radial direction opposite to that of magnetic attraction force KF.

Due to magnetic attraction force HF, rotational shaft 24 is displaced in a direction opposite to the rotational angle position holding portion 48 side in the axis-radial direction of rotational shaft 24 via magnet 26. As a result, the load on rotational shaft 24 in the axis-radial direction toward the rotational angle position holding portion 48 side due to magnetic attraction force KF is canceled.

That is, as illustrated in FIGS. 13 to 14, magnetic attraction force HF between complementary pole portion 415 and magnet 26 acts in the same circumferential direction as magnetic attraction force KF generated between rotational angle position holding portion 48 and magnet 26, and increases the rotational force of magnet 26 to the rotation reference position.

Magnetic attraction force HF generates a torque for moving magnet 26 to the rotation reference position as if adding a magnetic spring by magnetic attraction force KF. Further, as illustrated in FIG. 13, magnetic attraction force HF applies a load to rotational shaft 24 in a direction opposite to that of the load of magnetic attraction force KF in the axis-radial direction applied to rotational shaft 24. The load is applied in a direction such that the load that causes loss of the rotational force of rotational shaft 24 is cancelled. Accordingly, the load in the axis-radial direction to rotational shaft 24 by magnetic attraction force KF is cancelled. The loss torque in the bearings (first bearing 54 and second bearing 64) can be suppressed by magnetic attraction force KF, and the controllability of the rotary reciprocating drive actuator can be increased.

Accordingly, magnet 26 is positioned at the rotation reference position. A flow of the magnetic flux during the de-energization period is as illustrated in FIG. 14. At this time, the outer circumferential end portions of magnetic pole switching portions 263 and 264 of magnet 26 are disposed at positions facing the center positions of magnetic poles 411a and 412a of core body K.

When coils 44 and 45 are energized, core body K is magnetically excited, and magnetic poles 411a and 412a have polarities corresponding to the energization directions. As illustrated in FIG. 15, when coils 44 and 45 are energized, a magnetic flux is generated inside core body K, and magnetic pole 411a becomes the N pole and magnetic pole 412a becomes the S pole. Thus, magnetic pole 412a magnetized to the S pole attracts N pole 262 of magnet 26, and magnetic pole 411a magnetized to the N pole attracts S pole 261 of magnet 26. Then, torque in the F direction is generated in magnet 26 around the axis of rotational shaft 24, and magnet 26 rotates in the F direction. Along with this, rotational shaft 24 also rotates in the F direction, and mirror part 22 fixed to rotational shaft 24 also rotates in the F direction.

Next, as illustrated in FIG. 16, when coils 44 and 45 are energized in the opposite direction, the flow of the magnetic flux generated inside core body K is generated in the opposite direction. Then, magnetic pole 411a becomes the S pole and magnetic pole 412a becomes the N pole. Magnetic pole 412a magnetized to the N pole attracts S pole 261 of magnet 26, and magnetic pole 411a magnetized to the S pole attracts N pole 262 of magnet 26. Then, torque -F in the direction opposite to the F direction is generated in magnet 26 around the axis of rotational shaft 24, magnet 26 rotates in the -F direction. Along with this, rotational shaft 24 also rotates, and mirror part 22 fixed to rotational shaft 24 also rotates.

By repeating the above operation, rotary reciprocating drive actuator 1 drives reciprocating rotation of mirror part 22.

As illustrated in FIGS. 15 and 16, in rotary reciprocating drive actuator 1, complementary pole portion 415 is connected to connecting frame-shaped body 413 and frame base portion 423 of core body K that connect between rod-shaped bodies 411 and 412 including magnetic poles 411a and 412a. Therefore, during the energization period of coils 44 and 45, the magnetic flux for rotating magnet 26 flows in core body K at a connecting portion of complementary pole portion 415. Accordingly, the driving torque for rotating magnet 26 in the circumferential direction increases.

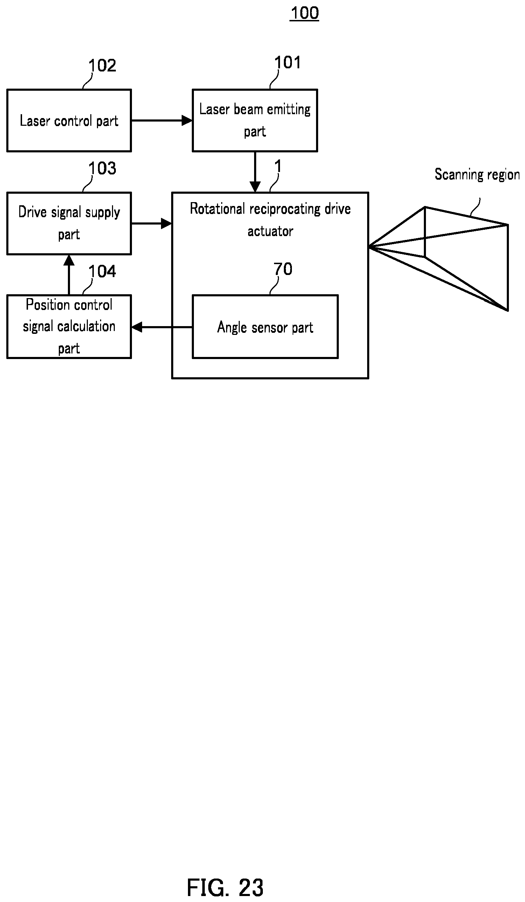

Practically, rotary reciprocating drive actuator 1 is driven by an AC wave input from a power supply part (e.g., corresponding to drive signal supply part 103 in FIG. 23) to coils 44 and 45. That is, the energization direction of coils 44 and 45 is switched periodically. When the energization direction is switched, a resultant force between, on one hand, magnetic attraction force KF between rotational angle position holding portion 48 and magnet 26 and, on the other hand, magnetic attraction force HF between complementary pole portion 415 and magnet 26, that is, a restoring force of the magnetic spring (magnetic spring torque FM or -FM illustrated in FIGS. 15 and 16) is generated. As a result, magnet 26 returns to the rotation reference position. Specifically, S pole 261 of magnet 26 is biased to return to the position facing the magnetic surface of rotational angle position holding portion 48. Thus, the torque in the F direction around the axis and the torque in the direction opposite to the F direction (-F direction) act alternately on the movable body. Thus, reciprocating rotation of the movable body is driven.

The driving principle of rotary reciprocating drive actuator 1 will be briefly described below. In rotary reciprocating drive actuator 1 of the present embodiment, letting the inertial moment of the movable body (movable part) be J [kg·m²], and the spring constants in the directions of axes of the magnetic springs (magnetic poles 411a and 412a, complementary pole portion 415, rotational angle position holding portion 48, and magnet 26) be $K_{sp}$ [N·m/rad], the movable body vibrates (performs reciprocating rotation) with respect to the fixing body (unit fixing part 30) at resonant frequency Fr [Hz] calculated as given by Equation 1.

[1]

$$Fr = \frac{1}{2\pi}\sqrt{\frac{K_{sp}}{J}} \qquad \dots \text{(Expression 1)}$$

$Fr$ : Resonant frequency [Hz]
$J$ : Inertial moment [kg·m²]
$K_{sp}$ : Spring constant [N·m/rad]

Since the movable body is a mass in a vibration model of a spring-mass system, the movable body is brought into a resonance state when the AC wave of a frequency equal to resonant frequency Fr of the movable body is input to coils 44 and 45. That is, the movable body can be efficiently vibrated by inputting the AC wave of a frequency being substantially equal to resonant frequency Fr of the movable body to coils 44 and 45 from the power supply part.

The equation of motion and the circuit equation representing the driving principle of rotary reciprocating drive actuator 1 are illustrated below. Rotary reciprocating drive actuator 1 is driven based on the equation of motion represented by Equation 2 and the circuit equation represented by Equation 3.

[2]

$$J\frac{d^2\theta(t)}{dt^2} = K_t i(t) - K_{sp}\theta(t) - D\frac{d\theta(t)}{dt} - T_{Loss} \qquad \dots \text{(Expression 2)}$$

$J$ : Inertial moment [kg·m²]

$\theta(t)$ : Angle [rad]

$K_t$ : Torque constant [N·m/A]

$i(t)$ : Current [A]

$K_{sp}$ : Spring constant [N·m/rad]

$D$ : Damping coefficient [N·m/(rad/s)]

$T_{Loss}$ : Loading torque [N·m]

[3]

$$e(t) = Ri(t) + L\frac{di(t)}{dt} + K_e\frac{d\theta(t)}{dt} \qquad \dots \text{(Expression 3)}$$

$e(t)$ : Voltage [V]
$R$ : Resistance [Ω]
$L$ : Inductance [H]
$K_e$ : Counter electromotive force constant [V/ (rad/s)]

That is, inertial moment J [kg·m²], rotational angle $\theta(t)$ [rad], torque constant $K_t$ [N·m/A], current i(t) [A], spring constant $K_{sp}$ [N·m/rad], damping coefficient D [N·m/(rad/s)], loading torque $T_{Loss}$ [N·m], and the like of the movable body in rotary reciprocating drive actuator 1 may be changed appropriately as long as Equation 2 is satisfied. In addition, voltage e(t) [V], resistance R [Ω], inductance L [H], and reverse electromotive force constant $K_e$ [V/(rad/s)] may be changed appropriately as long as Equation 3 is satisfied.

As is understood, rotary reciprocating drive actuator 1 can efficiently obtain large vibrational outputs when the coils are energized by an AC wave corresponding to resonant frequency Fr determined by inertial moment J of the movable body and spring constant $K_{sp}$ of the magnetic spring.

According to rotary reciprocating drive actuator 1 of the present embodiment, unit movable part (movable body) 20 and unit fixing part (fixing body) 30 are provided. Unit movable part 20 includes magnet 26 fixed to rotational shaft 24 (shaft portion) to which mirror part 22 as a movable object is connected, and is disposed to be capable of a reciprocating rotation about rotational shaft 24.

Unit fixing part 30 includes a plurality of magnetic poles 411a and 412a including a plurality of coils 44 and 45, rotational angle position holding portion (one example of the first magnetic attraction member) 48, and complementary pole portion (second magnetic attraction member) 415 such that the magnetic poles, the rotational angle position holding portion, and the complementary pole portion are disposed to face the outer circumference of magnet 26.

Rotational angle position holding portion 48 generates, between the rotational angle position holding portion and magnet 26, magnetic attraction force (first magnetic attraction force) KF that defines the rotational center position of the reciprocating rotation of unit movable part 20. Complementary pole portion 415 generates, between the complementary pole portion and magnet 26, magnetic attraction force (second magnetic attraction force) HF that cancels the axis-radial load acting on unit movable part 20 by magnetic attraction force KF. Rotary reciprocating drive actuator 1 generates the magnetic flux passing through the plurality of magnetic poles 411a and 412a by energizing the plurality of coils 44 and 45. Thus, rotary reciprocating drive actuator 1 causes a reciprocating rotation of unit movable part 20 about the axis of rotational shaft 24 with reference to the rotational center position by the electromagnetic interaction between the magnetic flux and magnet 26.

Further, according to Embodiment 1, first shaft support 50 and second shaft support 60 that are a pair of shaft supports for supporting rotational shaft 24 such that the rotational shaft is rotatable are disposed respectively on opposite sides of rotational shaft 24 of core assembly 40 in the extending direction. Such a pair of shaft supports 50 and 60 are fixed while sandwiching core assembly 40, and support reciprocating rotation of unit movable part 20 about the axis of rotational shaft 24 by electromagnetic interaction between the magnetic flux and magnet 26.

In the embodiments, mirror part 22 being a movable object is supported via rotational shaft 24 that is rotatably supported by the pair of shaft supports (50, 60) fixed to sandwich core assembly 40 and that protrudes from unit fixing part 30 on one side, such that the mirror part is capable of a reciprocating rotation. Thus, in rotary reciprocating drive actuator 1, it is possible to reliably stably movably support mirror part 22 via rotational shaft 24 even when the rotational shaft is a cantilever.

That is, in unit fixing part 30, a portion of rotational shaft 24 on which magnet 26 is disposed is supported at two points by first shaft support 50 and second shaft support 60 sandwiching core assembly 40. Thus, even when the magnetic attraction force between magnet 26 and rotational angle position holding portion 48 is increased, it is possible to ensure the linearity of rotational shaft 24.

For example, a case is supposed in which the portion of rotational shaft 24 where magnet 26 is disposed is supported only by second shaft support 60 and is in a cantilevered state. In this case, when the magnetic attraction force between magnet 26 and rotational angle position holding portion 48 increases, there is a possibility that rotational shaft 24 is bent toward the rotational angle position holding portion 48 side and the linearity is lowered. Such a problem does not occur in the present embodiment.

As is understood, according to rotary reciprocating drive actuator 1, it is possible to further reduce the size and space. The rotary reciprocating drive actuator has an impact resistance and vibration resistance characteristics, and can drive the movable object via the shaft portion more stably at a high amplitude.

Further, mirror part 22 is spaced apart from coils 44 and 45 via rotational shaft 24. Thus, there is no influence by coil heat generation. Accordingly, as compared with a configuration in which a mirror part is close to coils, it is possible to increase the input current, and to achieve reciprocating rotational driving with a high output (high amplitude). In addition, the coils are not disposed on the movable body side, and magnetic poles 411a and 412a and complementary pole portion 415 are integrated as magnetic pole core 41. Thus, the manufacturability is high and the assembly accuracy can be maintained.

Further, even when the movable part, for example, mirror part 22, is enlarged, the reciprocating rotation is possible at a high amplitude with using two magnetic poles as magnetic poles on the core side. Further, the load in the axis-radial direction due to magnetic attraction force KF between rotational angle position holding portion 48 and magnet 26 is cancelled by magnetic attraction force HF between complementary pole portion 415 and magnet 26.

As a result, a load in the axis-radial direction generated during application, to rotational shaft 24, of the torque for rotating magnet 26 toward the rotation reference position is reduced, regardless of whether reciprocating rotational driving is performed during the de-energization period or during the energization period. Thus, no load is not applied to first bearing 54 and second bearing 64 in the axis-radial direction. Thus, friction is less likely to occur when rotational shaft 24 rotates, since no load in the axis-radial direction is applied to first bearing 54 and second bearing 64. It is possible to suppress the loss torque in first bearing 54 and second bearing 64 to rotate rotational shaft 24 smoothly. Accordingly, the high output can be efficiently achieved by suitable driving. In addition, the biasing force of the magnetic spring between rotational angle position holding portion 48 and magnet 26 can be increased.

Further, in terms of the magnetic spring or holding torque in rotary reciprocating drive actuator 1 that drives a reciprocating rotation, a suitable magnetic spring and holding torque can be secured by suppressing a load in the axis-radial direction applied to rotational shaft 24, without hindering the reciprocating rotation driving of rotational shaft 24.

Magnetic pole core 41 and magnetic path core 42 are laminated members. Thus, these cores do not require effort in manufacturing. It is possible to configure magnetic pole core 41 and magnetic path core 42 with a complex shape at a low cost.

Magnetic pole core 41 includes a plurality of rod-shaped bodies 411 and 412 and connecting frame-shaped body 413 that connects the plurality of rod-shaped bodies 411 and 412 to each other in an integral structure. The plurality of rod-shaped bodies 411 and 412 include a plurality of magnetic poles 411a and 412a at their tip end portions, respectively, and extend in parallel to each other from base end portions 411b and 412b to the tip end portions. The plurality of coils 44 and 45 are externally fitted to the intermediate portions of the rod-shaped bodies, respectively. Connecting frame-shaped body 413 extends in a direction intersecting the parallel direction of rod-shaped bodies 411 and 412 at base end portions 411b and 412b.

Magnetic pole core 41 is assembled to magnetic path core 42. Magnetic path core 42 faces and makes surface contact with connecting frame-shaped body 413 in the extending direction of rotational shaft 24. A plurality of magnetic poles 411a and 412a are positioned around rotational shaft 24, with coils 44 and 45 being adjacent to the magnetic poles in a stable state.

Thus, even in the case of a core having magnetic poles 411a and 412a disposed to face each other across magnet 26, it is possible to reduce the manufacturing cost while achieving a high output. It is possible to increase the arrangement accuracy for magnetic poles 411a and 412a, to arrange the magnetic poles without variation. Therefore, it is possible to improve the reliability of rotary reciprocating drive actuator 1.

Further, magnetic path core 42 includes extension portions (frame lateral side portions 421 and 422 and bridge portion 427) extending outside of rod-shaped bodies 411 and 412. The extension portions form surrounding portion 420, and are disposed, together with connecting frame-shaped body 413, around rotational shaft 24 so as to surround coils 44 and 45. Thus, it is possible to suppress electromagnetic noise generated from energized coils 44 and 45. Further, it is possible to suppress the leakage magnetic flux from coils 44 and 45 and magnet 26, to prevent an electromagnetic influence on an external device.

Further, when rotational angle position holding portion 48 is a magnet, it is possible to more accurately position the movable object to the reference position as the rotational center position of the movable body when reciprocating rotation of the movable body is driven. It is possible to drive reciprocation from that position, to ensure reciprocation drive.

Further, the movable object is mirror part 22 (particularly, mirror 221) for reflecting the scanning light. Thus, rotary reciprocating drive actuator 1 can be used in an application of a scanner that performs optical scanning. As is understood, according to rotary reciprocating drive actuator 1, even in a simple configuration using a single magnet instead of using a plurality of magnets on the movable part side, the movable part can be driven at a high amplitude in a more stable state, with the magnet being positioned reliably at the reciprocating rotation center.

(Embodiment 2)

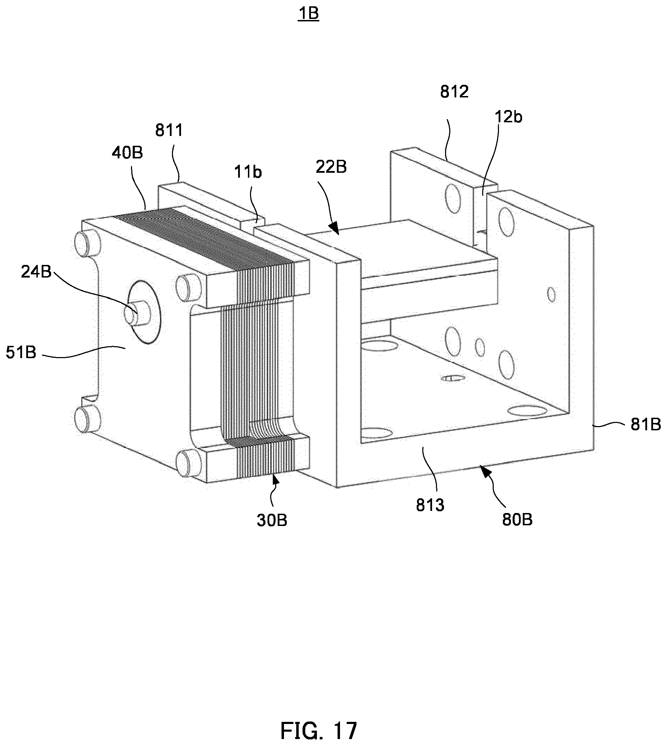

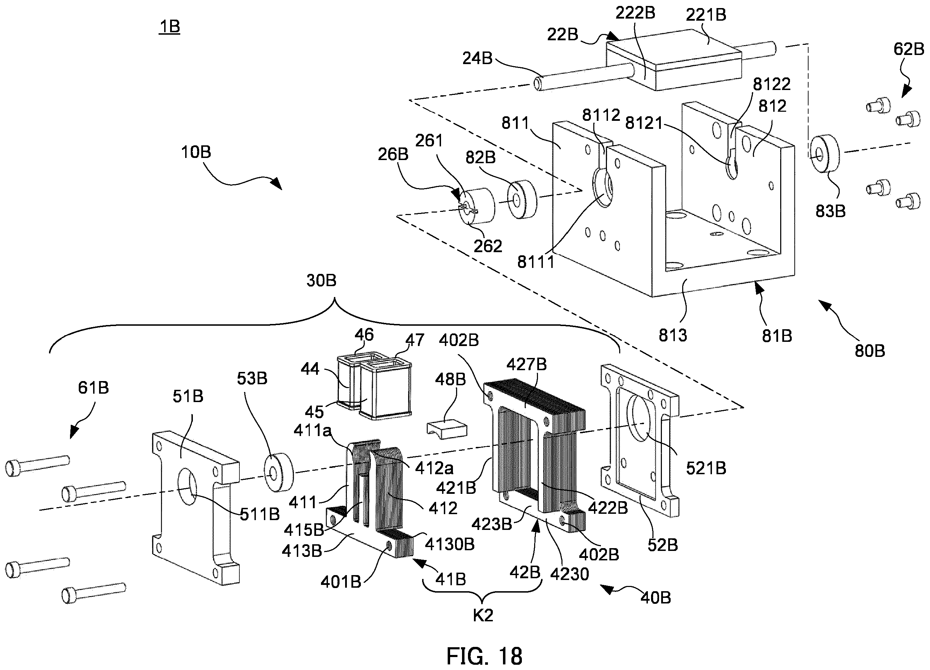

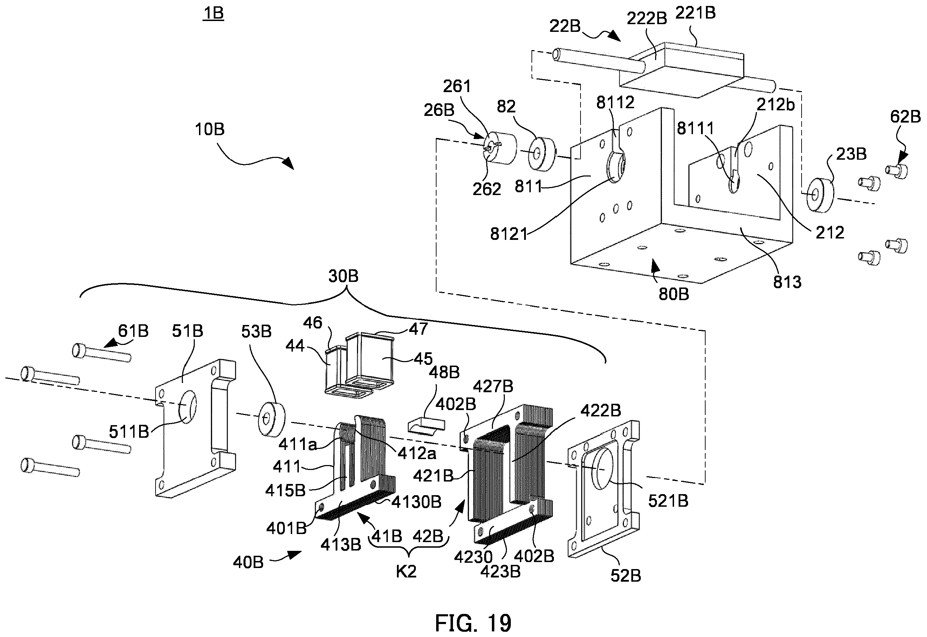

FIG. 17 is an external perspective view of rotary reciprocating drive actuator 1B according to Embodiment 2, FIG. 18 is a plan side exploded perspective view of rotary reciprocating drive actuator 1B, and FIG. 19 is a bottom-surface-side exploded perspective view of rotary reciprocating drive actuator 1B.

Rotary reciprocating drive actuator 1B is used, for example, in a Laser Imaging Detection and Ranging (LiDAR) apparatus as in Embodiment 1. In addition, it is natural that rotary reciprocating drive actuator 1B is also applicable to an optical scanning apparatus such as a multifunctional machine, a laser beam printer, or the like.

Rotary reciprocating drive actuator 1B broadly includes mirror part 22B, base part 80B that supports mirror part 22B such that the mirror part is rotatable, and driving unit 10B that drives a reciprocating rotation of mirror part 22B with respect to base part 80B. Rotary reciprocating drive actuator 1B may further be provided with an angle sensor similar to angle sensor part 70 that detects the rotational angle position of mirror part 22, similarly to rotary reciprocating drive actuator 1.

Rotary reciprocating drive actuator 1B includes core body K2 having a configuration similar to that in rotary reciprocating drive actuator 1, and is driven by a magnetic circuit configuration similar to that of the magnetic circuit of rotary reciprocating drive actuator 1.

<Mirror Part 22B>

Mirror part 22B is a movable object in rotary reciprocating drive actuator 1B, and is connected to rotational shaft 24B. Mirror part 22B is formed by, for example, bonding mirror 221B to one surface of mirror holder 222B. Rotational shaft 24B is inserted into insertion hole 223B in mirror holder 222B and is fixed thereto.

<Base Part 80B>

Rotary reciprocating drive actuator 1 is fixed to base part 80B. The base part supports mirror part 22B such that the mirror part is capable of a reciprocating rotation. Base part 80B includes base main body 81B and bearings 82B and 83B.

Base main body 81B includes a pair of wall portions 811 and 812. The pair of wall portions 811 and 812 are disposed upright to face each other on axially opposite ends of wall portion 813 forming a flat plate-shaped bottom portion. Base main body 81B as seen in a section is formed substantially in a U-shape.

Insertion holes 8111 and 8121 through which rotational shaft 24B is inserted are formed in the pair of wall portions 811 and 812, respectively. Further, cutout holes 8112 and 8122 are formed in the pair of wall portions 811 and 812 to communicate between insertion holes 8111 and 8121 and the outer edges of the pair of wall portions 811 and 812, respectively.

Thus, in a state in which mirror part 22B is fixed to rotational shaft 24B, rotational shaft 24B can be disposed at positions of insertion holes 8111 and 8121 via cutout holes 8112 and 8122. When cutout holes 8112 and 8122 are not provided, rotational shaft 24B is inserted into both insertion holes 8111 and 8121 in the pair of wall portions 811 and 812 and an insertion hole in mirror holder 222B in a state in which mirror part 22B is disposed between the pair of wall portions 811 and 812. Further, a complicated assembly work such as fixation of rotational shaft 24B and mirror holder 222B is required. In contrast, in the present embodiment, cutout holes 8112 and 8122 are formed. Thus, rotational shaft 24B to which mirror part 22B is fixed in advance can be easily inserted into insertion holes 8111 and 8121.

In the pair of wall portions 811 and 812, bearings 82B and 83B are attached to attachment portions (not illustrated) disposed in insertion holes 8111 and 8121. Bearings 82B and 83B may be rolling bearings (e.g., ball bearings) or plain bearings for base main body 81B. For example, when bearings 82B and 83B are rolling bearings, the frictional coefficient is low, and rotational shaft 24B can be smoothly rotated. Thus, the driving performance of rotary reciprocating drive actuator 1B is improved. Thus, rotational shaft 24B is rotatably attached to base main body 81B via bearings 82B and 83B, and mirror part 22B which is a movable object is disposed between the pair of wall portions 811 and 812.

After rotational shaft 24B is inserted in bearings 82B and 83B from opposite sides of rotational shaft 24B in the axial direction, and is disposed in insertion holes 8111 and 8121, the bearings are attached to bearing attachment portions disposed in insertion holes 8111 and 8121. In this way, rotational shaft 24B is rotatably attached to base main body 81B via bearings 82B and 83B.

Magnet 26B is fixed to one end of rotational shaft 24B. Magnet 26B is disposed within unit fixing part 30B of driving unit 10B described later. A reciprocating rotation of the magnet is driven by a magnetic flux generated by driving unit 10B.

As is understood, in the present embodiment, rotational shaft 22B to which mirror part 24B as the movable object is attached is pivotally supported by the pair of wall portions 811 and 812 of base main body 81B such that mirror part 22B is supported from opposite sides. As a result, mirror part 22B is more firmly supported than in a case where rotational shaft 24B is supported in a cantilevered manner, and the impact resistance and the vibration resistance are enhanced.

<Driving Unit 10B>

As illustrated in FIGS. 18 to 20, driving unit 10B includes core assembly 40B including core body K2 and coils 44 and 45, rotational shaft 24B, magnet 26B, first case 51B, second case 52B, and case-side bearing 53B. Driving unit 10B is fixed to base main body 81B by rotational shaft 24B disposed to extend between the pair of wall portions 811 and 812.

Core assembly 40B includes rotational angle position holding portion 48B and the like in addition to core body K2 and coils 44 and 45.

In the present embodiment, core assembly 40B is formed in a rectangular plate shape in which magnetic poles 411a and 412a are disposed inside.

<Core Body K2>

Core body K2 has the same basic configuration as core bodies K and K1. Core body K2 includes magnetic pole core 41B including a plurality of magnetic poles 411a and 412a and complementary pole portion 415B, and magnetic path core 42B magnetically coupled to and integrated with magnetic pole core 41B to form a magnetic path with magnetic pole core 41B.

Magnetic pole core 41B and magnetic path core 42B allow a magnetic flux generated during energization of coils 44 and 45 to pass through the plurality of magnetic poles 411a and 412a. Magnetic pole core 41B and magnetic path core 42B are, for example, a laminated core formed by laminating electromagnetic steel plates such as silicon steel sheets (laminated members). By forming core body K2 in a stacked structure, magnetic pole core 41B and magnetic path core 42B having complicated shapes can be formed at low cost.

<Magnetic Pole Core 41B>

Magnetic pole core 41B includes a plurality of rod-shaped bodies 411 and 412 respectively including a plurality of magnetic poles 411a and 412a at their tip end portions, complementary pole portion 415B, and connecting body 413B, as an integral structure.

Since rod-shaped bodies 411 and 412 and magnetic poles 411a and 412a are the same as those of magnetic pole core 41 of Embodiment 1, detailed description thereof will be omitted. Rod-shaped bodies 411 and 412 include, at their tip ends, magnetic poles 411a and 412a that are disposed to face magnet 26B and have arc-shaped magnetic pole surfaces. Rod-shaped bodies 411 and 412 extend in parallel to each other from base end portions 411b and 412b to the tip end portions (including magnetic poles 411a and 412a), and a plurality of coils 44 and 45 are externally fitted to the rod-shaped bodies at intermediate portions, respectively.

When magnetically excited by energization of coils 44 and 45, magnetic poles 411a and 412a at the tip end portions of rod-shaped bodies 411 and 412 assume polarities depending on the energization direction. Rod-shaped bodies 411 and 412 have the same thickness as the thickness (the length in the extending direction of rotational shaft 24B) of core body K2. The rod-shaped bodies are formed to be flush with connecting body 413B at the left-side surface while protruding from connecting body 413B on the right-side surface. The protruding portion of rod-shaped body 411 on the right-side surface is disposed in magnetic path core 42B.

Portions of magnetic poles 411a and 412a facing magnet 26B have a shape curved along the outer circumferential surface of magnet 26B. These curved shapes, for example, are disposed to face each other in a direction perpendicular to the extending direction of rod-shaped bodies 411 and 412.

Magnetic poles 411a and 412a have external dimensions that allow bobbins 46 and 47 to be externally fitted to the magnetic poles and to be positioned at positions surrounding rod-shaped bodies 411 and 412 in the same manner as in Embodiment 1.

Connecting body 413B extends in a direction intersecting the parallel direction of rod-shaped bodies 411 and 412 at the base end portions of rod-shaped bodies 411 and 412 and complementary pole portion 415B, and connects rod-shaped bodies 411 and 412 and complementary pole portion 415B to one another.

Connecting body 413B mainly forms a magnetic path connecting the base end portions of rod-shaped bodies 411 and 412 and the base end portions of leg portions 421B and 422B in magnetic path core 42B.

Connecting body 413B is formed in a rectangular columnar shape, and extends in a direction orthogonal to the parallel direction of rod-shaped bodies 411 and 412 and complementary pole portion 415B, and the opposite end portions thereof are formed to laterally protrude orthogonally from base end portions 411b and 412b of rod-shaped bodies 411 and 412.

The opposite end portions of connecting body 413B function as core fixing piece portions for fixing magnetic pole core 41B and magnetic path core 42B, and attachment holes 401 are formed in the core fixing piece portions.

Fastening members 61B are inserted into attachment holes 401, and fixation by insertion into attachment holes in magnetic path core 42B, and in below-described first case 51B or second case 52B is performed.

Connecting body 413B includes planar magnetic-pole-side contact surface 4130B that makes surface contact with magnetic-path-side contact surface 4230 of magnetic path core 42B. Magnetic-pole-side contact surface 4130B is disposed over the entire surface of a part of connecting body 413B which faces magnetic path core 42B. Magnetic-pole-side contact surface 4130B of connecting body 413B is brought into surface contact with and bonded to magnetic-path-side contact surface 4230. Thus, magnetic pole core 41B is bonded to magnetic path core 42B while stacked thereon over the entire surface.

Complementary pole portion 415B is disposed on the same magnetic circuit as and has the same function as complementary pole portion 415 of the embodiment in the same manner as complementary pole portion 415.

That is, complementary pole portion 415B is formed of a magnetic material, and is disposed to face magnet 26B and to be spaced from the magnet by a predetermined distance in a direction perpendicular to the axial direction. Complementary pole portion 415B is disposed to, for example, together with magnetic poles 411a and 412a and rotational angle position holding portion 48B, surround magnet 26B in four directions. Complementary pole portion 415B generates a magnetic attraction force between the complementary pole portion and magnet 26B, thereby moving magnet 26B to the rotation reference position.

Complementary pole portion 415B generates the magnetic attraction force with magnet 26 together with rotational angle position holding portion 48B, and moves the poles of magnet 26B to positions opposite to each other, together with rotational angle position holding portion 48. By this action, complementary pole portion 415B cancels a radial load on the magnet generated by the magnetic attraction force in rotational angle position holding portion 48B.

In magnetic pole core 41B, rod-shaped bodies 411 and 412 and connecting body 413B have the integral structure. Thus, the positional relationship between a plurality of magnetic poles 411a and 412a does not change during assembly of rotary reciprocating drive actuator 1B.

That is, in magnetic pole core 41B together with magnetic path core 42B as a core body of core assembly 40B, magnetic poles 411a and 412a and complementary pole portion 415B are disposed at positions facing magnet 26B, and the magnetic pole core forms driving unit 10B. In this case, magnetic poles 411a and 412a are positioned at the accurate positions opposite to each other without being displaced from each other.

<Magnetic Path Core 42B>

Magnetic path core 42B has the same functions as magnetic path core 42, is connected to magnetic pole core 41B, and forms a magnetic path through which magnetic flux passes through magnetic poles 411a and 412a when coils 44 and 45 are energized.

Magnetic path core 42B faces connecting body 413B in the extending direction of rotational shaft 24B while making contact with the connecting frame-shaped body, and is assembled to magnetic pole core 41B, with a plurality of magnetic poles 411a and 412a being positioned around rotational shaft 24B.

Magnetic path core 42B, together with connecting body 413B, forms a magnetic path disposed around rotational shaft 24B to surround magnetic poles 411a and 412a and coils 44 and 45. That is, magnetic path core 42B includes a surrounding portion surrounding coils 44 and 45, and makes surface contact with connecting body 413B of magnetic pole core 41B at a part (magnetic-path-side connecting body 423B) of the surrounding portion. With this configuration, magnetic path core 42B has a higher strength, and magnetic poles 411a and 412a can be stably positioned. Further, magnetic path core 42B surrounds coils 44 and 45 annularly. It is thus possible to prevent external contact with coils 44 and 45.

Magnetic path core 42B is connected to connecting body 413B, and connects base end portions 411b and 412b of rod-shaped bodies 411 and 412 of magnetic pole core 41B to base end portions 421b and 422b of leg portions 421B and 422B. By this connection, the surrounding portion of magnetic path core 42B, together with connecting body 413B, surrounds magnetic poles 411a and 412a, coils 44 and 45, and even magnet 26B between magnetic poles 411a and 412a, and forms a magnetic circuit connecting between magnetic poles 411a and 412a.

The surrounding portion of magnetic path core 42B includes magnetic-path-side connecting body 423B that makes surface contact with magnetic-pole-side contact surface 4130B of connecting body 413B, leg portions 421B and 422B, and bridge portion 427B. Magnetic-path-side connecting body 423B connects together the base end portions of the pair of leg portions 421B and 422B. Attachment holes 402B are formed in opposite end portions of magnetic-path-side connecting body 423B.

In connecting body 413B and magnetic-path-side connecting body 423B, a pair of leg portions 421B and 422B are connected to portions extending outward of rod-shaped bodies 411 and 412, in particular, to the opposite end portions of the rod-shaped bodies, while making contact therewith in such a manner as to extend upright from one surfaces of connecting bodies 413B and 423B. Thus, the magnetic flux mainly passes through the pair of leg portions, bridge portion 427B, and rod-shaped body 411, magnet 26B, and rod-shaped body 412 from the opposite end portions of connecting body 413B.

Magnetic-path-side connecting body 423B includes magnetic-path-side contact surface 4230 facing connecting body 413B, and makes contact with magnetic-pole-side contact surface 4130B of connecting body 413B by magnetic-path-side contact surface 4230 to be overlaid with the magnetic-pole-side contact surface over the entire surface. Magnetic-path-side connecting body 423B can reduce the magnetoresistance at a joint portion between the magnetic-path-side connecting body and magnetic-pole-side contact surface 4130B of connecting body 413B.

Leg portions 421B and 422B are disposed to sandwich a pair of rod-shaped bodies 411 and 412, extend along the parallel direction of the pair of rod-shaped bodies 411 and 412, and be spaced from each other. Leg portions 421B and 422B are joined at the base end portions to the opposite end portions of magnetic-path-side connecting body 423B to extend therefrom in a direction intersecting magnetic-path-side connecting body 423B. Bridge portion 427B is disposed to extend between the tip end portions of leg portions 421B and 422B.

The thickness (the length in the extending direction of rotational shaft 24B) of each of leg portions 421B and 422B is, for example, formed to be the same as the thickness of bridge portion 427B, the thickness of rod-shaped bodies 411 and 412, the total of thicknesses of connecting body 413B and magnetic-path-side connecting body 423B. In leg portions 421B and 422B, it is preferable that the end surfaces of the base end portions at which the leg portions extend upright from magnetic-path-side connecting body 423B be formed to make surface contact with connecting body 413B.

Bridge portion 427B is disposed to be parallel to magnetic-path-side connecting body 423B. Bridge portion 427B is formed in a rectangular frame shape together with magnetic-path-side connecting body 423B joined to connecting body 413B, and leg portions 421B and 422B whose base end portions are joined to magnetic-path-side connecting body 423B and which are disposed to be parallel to each other. In the present embodiment, rotational angle position holding portion 48B having the same function as rotational angle position holding portion 48 disposed on bridge portion 427 is similarly disposed on bridge portion 427B.

In the present embodiment, leg portions 421B and 422B are connected to make contact with bridge portion 427B. In bridge portion 427B, attachment holes 402B are formed in portions protruding from joint portions between the bridge portion and leg portions 421B and 422B laterally toward opposite sides. Fastening members 61 are inserted in attachment holes 402B as well as in attachment holes 401B. Core assembly 40B is fixed to base main body 81B via fastening members 61 when rotary reciprocating drive actuator 1B is assembled.

In the assembled state of rotary reciprocating drive actuator 1B, rotational shaft 24B is inserted into a space surrounded by magnetic poles 411a and 412a. Magnet 26B attached to rotational shaft 24B is located in this space, and magnetic poles 411a and 412a face magnet 26B at accurate positions via air gap G.

Coils 44 and 45 are wound around cylindrical bobbins 46 and 47. Coil bodies composed of coils 44 and 45 and bobbins 46 and 47 are externally fitted to rod-shaped bodies 411 and 412 of magnetic pole core 41B. Thus, coils 44 and 45 are disposed to be wound around rod-shaped bodies 411 and 412. Thus, coils 44 and 45 are disposed adjacently to magnetic poles 411a and 412a located at the tip end portions of rod-shaped bodies 411 and 412.

The winding directions of coils 44 and 45 are set such that a magnetic flux is appropriately generated from one of magnetic poles 411a and 412a of magnetic pole core 41B toward the other when energization is performed.

<Rotational Angle Position Holding Portion (One Example of First Magnetic Attraction Member) 48B>

Rotational angle position holding portion 48B is incorporated into core assembly 40B so as to face magnet 26B via air gap G in the assembled state of rotary reciprocating drive actuator 1B. Rotational angle position holding portion 48B is attached, for example, to bridge portion 427B of magnetic path core 42B (the upper portions of rod-shaped bodies 411 and 412 of magnetic pole core 41B) in an attitude such that the magnetic pole faces magnet 26B.

Rotational angle position holding portion 48B is composed, for example, of a magnet different from magnet 26B, and generates a magnetic attraction force between the rotational angle position holding portion and magnet 26B, so as to attract magnet 26B. That is, rotational angle position holding portion 48B, together with rod-shaped bodies 411 and 412, forms a magnetic spring between the rotational angle position holding portion and magnet 26B. Because of this magnetic spring, the rotational angle position of magnet 26B, i.e., the rotational angle position of rotational shaft 24B is held in a rotation reference position in a normal state (de-energization period) in which coils 44 and 45 are not being energized.

First case 51B and second case 52B are made of an electrically conductive material and function as electromagnetic shields. First case 51B and second case 52B are disposed on opposite sides of core body K2 in the axial direction. First case 51B and second case 52B make it possible to suppress incidence of noise into the inside of core body K2 from the outside and emission of noise from core body K2 to the outside.

It is preferable that first case 51B and second case 52B be made of aluminum. The aluminum alloy has a high degree of freedom in design, and makes it possible to easily impart desired rigidity. Therefore, the aluminum alloy is suitable in a case where first case 51B is made to function as a support for supporting rotational shaft 24B.

Rotational shaft 24B is rotatably attached to first case 51B via case-side bearing 53B. Case-side bearing 53B is disposed on a bearing attachment portion (not illustrated) that is continuous to through hole 511B formed in first case 51B. In case-side bearing 53B, an end portion of rotational shaft 24B on the side where magnet 26B is disposed is rotatably and easily attached to first case 51B. Case-side bearing 53B is, for example, a rolling bearing or a plain bearing, and has the same function as bearings 82B and 83B. Case-side bearing 53B, together with bearing 82B of wall portion 813, supports rotational shaft 24B at the opposite sides of magnet 26B such that the magnet is capable of a reciprocating rotation.

Second case 52B positions and joins core assembly 40B to wall portion 813 of base main body 81B. Second case 52B and first case 51B sandwich core body K2, is integrally fixed via fastening members 61B, and is positioned and fixed to wall portion 813 via fastening members 62B.

Second case 52B includes insertion hole 521B larger than an outer shape of magnet 26B. Rotational shaft 24B to which magnet 26B is mounted is inserted into core assembly 40B via insertion hole 521B in second case 52B.

Core body K2 is sandwiched between first case 51B and second case 52B, is fixed by fastening members 61, and is integrated as core assembly 40B. Further, core assembly 40B is fixed to left side wall portion 811 of base main body 81B by fastening members 62B, and is integrated with base main body 81B.

Magnet 26B is a ring-type magnet in which S pole 261 and N pole 262 are disposed alternately in the circumferential direction. Magnet 26B is attached to the circumferential surface of rotational shaft 24B so as to be located in a space surrounded by magnetic poles 411a and 412a of core body K2 after rotary reciprocating drive actuator 1B is assembled. When coils 44 and 45 are energized, rod-shaped bodies 411 and 412 and magnetic path core 42B are magnetically excited to generate polarities corresponding to the energization directions in magnetic poles 411a and 412a, and a magnetic force (attraction force and repulsion force) is generated between magnetic poles 411a and 412a and magnet 26B.

In the present embodiment, magnet 26B like magnet 26 is magnetized to different polarities changed at a plane along the axial direction of rotational shaft 24B serving as a boundary. That is, magnet 26B is a two-pole magnet magnetized so as to be equally divided into S pole 261 and N pole 262. The number of magnetic poles of magnet 26B (two in the present embodiment) is equal to the number of magnetic poles 411a and 412a of core body K2. Note that, magnet 26B may be magnetized to have two or more poles depending on the amplitude at the time of movement. In this case, magnetic pole portions of core body K2 are disposed correspondingly to the magnetic poles of magnet 26B.

Since the magnetic circuit configuration of the present embodiment including magnet 26B is the same as that of Embodiment 1, the description thereof will be omitted. In driving unit 10B, a part of rotational shaft 24B where magnet 26B is disposed is supported at two points by case-side bearing 53B of first case 51B and bearing 82B of left-side wall portion 811. Thus, even when the magnetic attraction force between magnet 26B and rotational angle position holding portion 48B increases, the linearity of rotational shaft 24B extending in the axial direction can be secured not only because of the magnetic attraction force of complementary pole portion 415B but also because of the two-point support structure.

That is, when the part of rotational shaft 24B where magnet 26B is disposed is supported only by left-side wall portion 813, the rotational shaft is supported in a cantilevered manner. When the magnetic attraction force between magnet 26B and rotational angle position holding portion 48B increases, a load causing displacement toward rotational angle position holding portion 48B is applied to rotational shaft 24B. Accordingly, there is a possibility that the linearity decreases due to the bending toward the rotational angle position holding portion 48B side. Such a problem does not occur in the present embodiment. The linearity of rotational shaft 24B can be maintained. Rotational shaft 24B can be suitably rotated around the axis without being displaced.

The driving principle of rotary reciprocating drive actuator 1B is the same as the driving principle of rotary reciprocating drive actuator 1 based on above Equations 1, 2, and 3, and therefore will not be described.

(Embodiment 3)

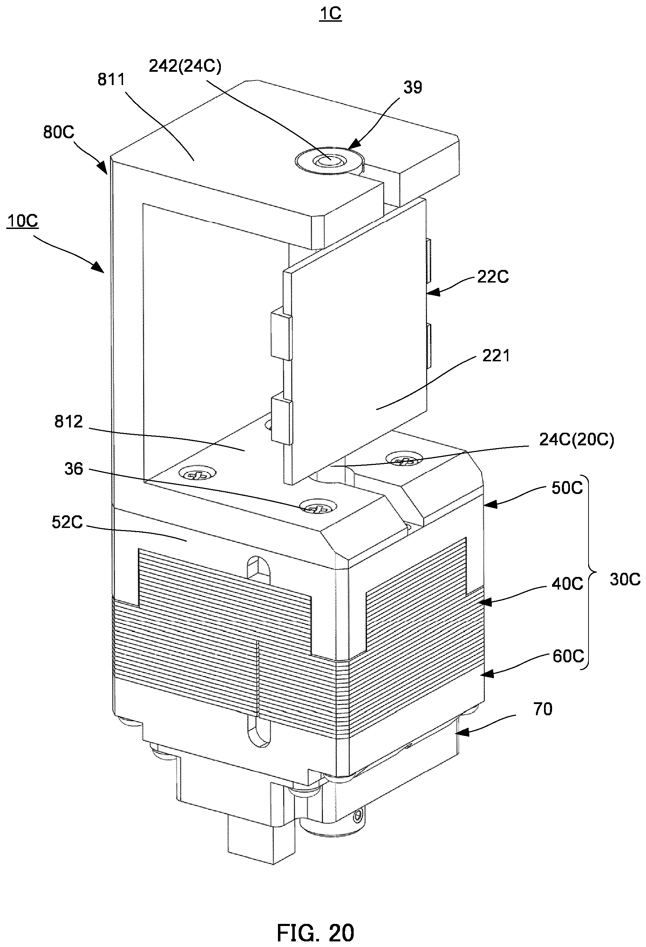

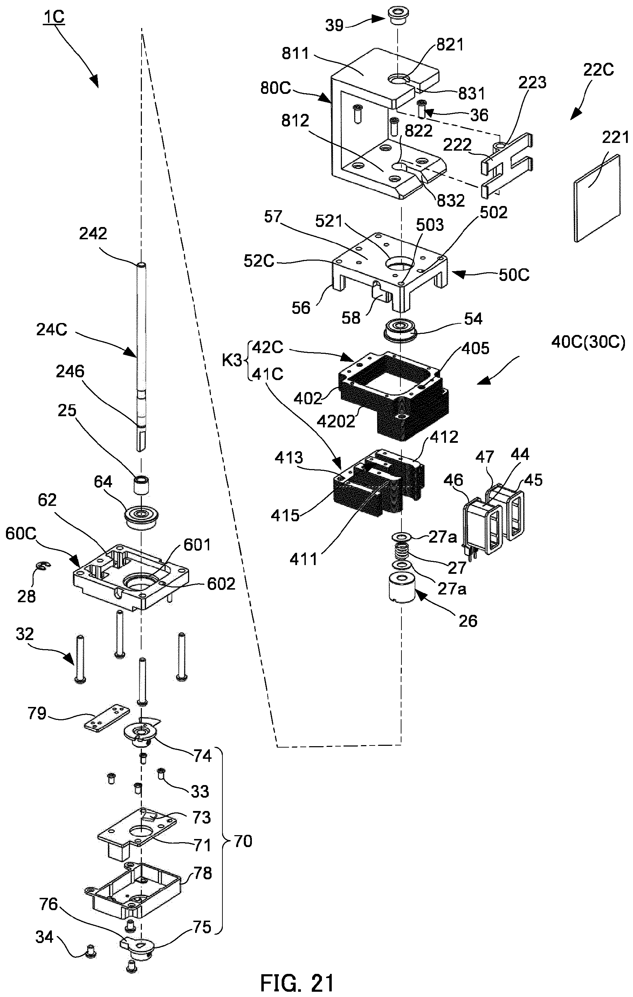

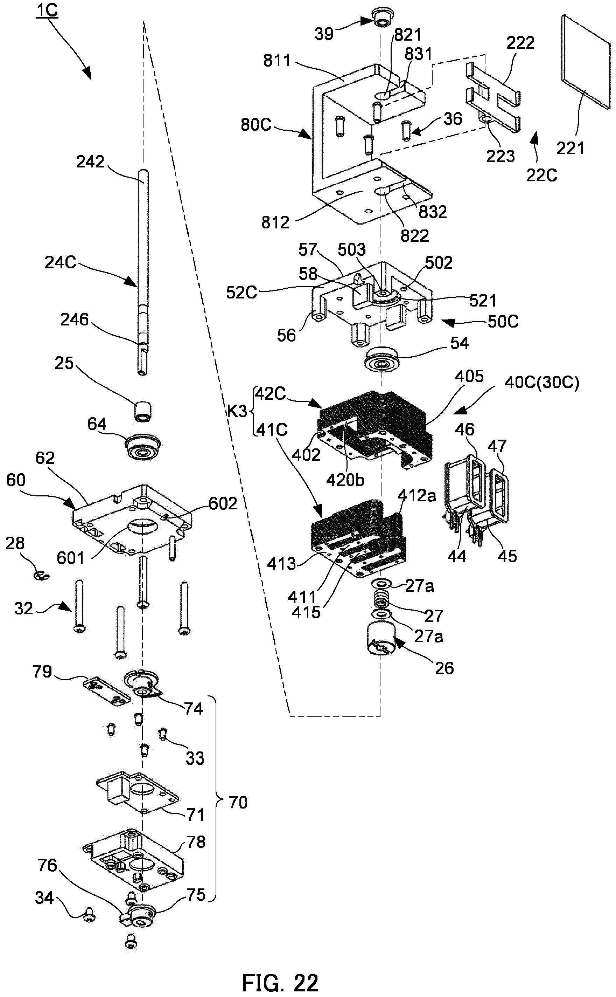

FIG. 20 is an external perspective view of rotary reciprocating drive actuator 1C of Embodiment 3, and FIG. 21 is a flat-surface-side exploded perspective view of rotary reciprocating drive actuator 1C. FIG. 22 is a bottom-surface-side exploded perspective view of rotary reciprocating drive actuator 1C.

Rotary reciprocating drive actuator 1C illustrated in FIGS. 20 to 22 is a rotary reciprocating drive actuator for supporting a movable object such that the movable object is capable of a reciprocating rotation, in which the movable object is enlarged as compared with that in rotary reciprocating drive actuator 1.

Rotary reciprocating drive actuator 1C has the same configuration as rotary reciprocating drive actuator 1 except for a difference in that rotary reciprocating drive actuator 1C includes auxiliary frame 80C, a difference in the configuration of first shaft support 50C to which auxiliary frame 80C is attached, and a difference in the length of rotational shaft 24C. Therefore, in the following, a description will be given only of different configurations between rotary reciprocating drive actuator 1C and rotary reciprocating drive actuator 1, and a description of the other same configurations will be omitted.

Rotary reciprocating drive actuator 1C has the same function as that of rotary reciprocating drive actuator 1, and includes a driving unit 10C, a mirror part 22C, an auxiliary frame 80C, and an angle sensor part 70.

Driving unit 10C differs from driving unit 10 in the configuration of first shaft support 50 in unit fixing part 30. In driving unit 10C, the top surface of support body portion 52C of first shaft support 50C of unit fixing part 30C includes frame fixing surface 57 to which one wall portion 811 of the pair of wall portions 811 and 812 of auxiliary frame 80C is fixed.

In driving unit 10C, core body K3 is formed in the same manner as core body K. Core body K3 includes magnetic pole core 41C configured similarly to magnetic pole core 41 and including magnetic poles 411a and 412a and complementary pole portion 415, and magnetic path core 42C configured similarly to magnetic path core 42. Since their functions are the same as the functions of those denoted by the same names and the same reference numerals in Embodiment 1 and are the same functions, the description thereof will be omitted. In particular, complementary pole portion 415 can obtain the same effects as in Embodiment 1. The driving principle of rotary reciprocating drive actuator 1C is the same as the driving principle of rotary reciprocating drive actuator 1 based on above Equations 1, 2, and 3, and therefore will not be described.

Auxiliary frame 80C is fixed to frame fixing surface 57 via fastening members 36. As compared with driving unit 10, driving unit 10C includes longer rotational shaft 24C of unit movable part 20, and is configured such that first shaft support 50C and second shaft support 60C sandwich core assembly 40.

Rotational shaft 24C has such a length as to extend between wall portions 811 and 812 of auxiliary frame 80C, and is disposed to extend from insertion hole 822 to insertion hole 821.

In rotary reciprocating drive actuator 1C, auxiliary frame 80C is attached to driving unit 10C and mirror part 22C being a movable object is supported to be capable of a reciprocating rotation.

Auxiliary frame 80C is a member including a pair of wall portions 811 and 812 and having a substantial U shape turned sideways when seen in a section. Insertion holes 821 and 822 through which rotational shaft 24C is inserted are formed in a pair of wall portions 811 and 812, respectively. Rotational shaft support portion 39 in which a tip end of rotational shaft 24C is rotatably inserted is fitted in insertion hole 821. Further, cutout holes 831 and 832 communicating between insertion holes 821 and 822 and the outer edges of the wall portions 811 and 812, respectively, are formed in the pair of wall portions 811 and 812.

Rotational shaft support portion 39 may have any configuration as long as it supports inserted rotational shaft 24C such that the rotational shaft is rotatable, and may include a sliding bearing, a resin-made bushing, or the like. Rotational shaft support portion 39 supports, between a pair of wall portions 811 and 812 of auxiliary frame 80C, tip end portion 242 of rotational shaft 24C to which mirror part 22C is attached.

Thus, rotational shaft 24C can be disposed at a position on axial line j of rotary reciprocating drive actuator 1C via cutout holes 831 and 832, with mirror part 22C being fixed to rotational shaft 24C.

Further, rotational shaft 24C is disposed between wall portions 811 and 812 of auxiliary frame 80C.

When cutout holes 831 and 832 are not provided, rotational shaft 24C is inserted into both of insertion holes 821 and 822 in wall portions 811 and 812, with mirror part 22C being disposed between the pair of wall portions 811 and 812, and further complicated assembly work such as fixation of rotational shaft 24C and mirror part 22C to each other is required. In contrast, in the present embodiment, cutout holes 831 and 832 are formed. Thus, rotational shaft 24C to which mirror part 22C is fixed in advance can be easily inserted into insertion holes 821 and 822.

According to this configuration, when the movable object is enlarged, i.e., even when mirror part 22C is supported by supporting driving unit 10C with a cantilever structure, it is possible to stabilize the behavior of mirror part 22C, to ensure impact resistance and vibration properties, and to stably support the mirror part such that the mirror part is capable of a reciprocating rotation.

(Scanner System 100)

FIG. 23 is a block diagram illustrating a principal structure of scanner system 100 using rotary reciprocating drive actuator 1.

Scanner system 100 includes, in addition to rotary reciprocating drive actuator 1, laser beam emitting part 101, laser control part 102, drive signal supply part 103, and position control signal calculation part 104. Note that scanner system 100 may use rotary reciprocating drive actuator 1B or 1C instead of rotary reciprocating drive actuator 1. Regardless of whether or not to be applied to scanner system 100, each of rotary reciprocating drive actuators 1, 1B, and 1C may be configured as a rotary reciprocating drive actuator using core assembly 40A or core body K1 instead of the core assembly or the core body in the configuration of each of rotary reciprocating drive actuators 1, 1B, and 1C.

Laser beam emitting part 101 includes, for example, a Laser Diode (LD) serving as a light source, and a lens system for focusing the laser beam output by the light source. Laser control part 102 controls laser beam emitting part 101. A laser beam emitted by laser beam emitting part 101 is incident on mirror 221 of rotary reciprocating drive actuator 1.

With reference to an angular position of rotational shaft 24 (mirror 221) obtained by angle sensor part 70 and a target angle position, position control signal calculation part 104 generates and outputs a drive signal for controlling rotational shaft 24 (mirror 221) such that the mirror comes to the target angle position. For example, position control signal calculation part 104 generates a position control signal based on the obtained angular position of rotational shaft 24 (mirror 221) and a signal indicating the target angle position as converted using a saw waveform data or the like stored in a waveform memory (not illustrated). Position control signal calculation part 104 outputs the generated position control signal to drive signal supply part 103.

Based on the position control signal, drive signal supply part 103 supplies, to coils 44 and 45 of rotary reciprocating drive actuator 1, a drive signal such that the angular position of rotational shaft 24 (mirror 221) comes to the desired angular position. Thus, scanner system 100 can emit scanning light from rotary reciprocating drive actuator 1 to a predetermined scanning region.

Note that, even in the configuration in which first shaft support 50C configured substantially in the same manner as first shaft support 50 and the tip end of rotational shaft 24C are distant from first bearing 54 as in rotary reciprocating drive actuator 1C of Embodiment 3, suitable support is possible by auxiliary frame 80C and rotational shaft support portion 39.

Core body K has an integral structure in which the core body is formed from magnetic pole core 41 and magnetic path core 42 being separate parts, and magnetic poles 411a and 412a in magnetic pole core 41 are at positions facing the outer circumference of magnet 26. Thus, even when the shape of core body K including magnetic pole core 41 and magnetic path core 42 is complicated, it is possible to easily manufacture the core body without lowering the placement accuracy of the plurality of magnetic poles 411a and 412a.

While the invention made by the present inventors has been specifically described based on the preferred embodiment, it is not intended to limit the present invention to the above-mentioned preferred embodiment, but the present invention may be further modified within the scope and spirit of the invention defined by the appended claims.

For example, the embodiment has been described in connection with the case where the movable object is mirror part 22, but the movable object is not limited to this. The movable object may be, for example, an imaging device such as a camera.

For example, while the embodiment has been described in connection with the case of resonantly driving rotary reciprocating drive actuator 1, the present invention is also applicable to the case of non-resonant driving.

The configuration of unit fixing part 30 is not limited to that described in the embodiment. For example, the core only needs to include a plurality of magnetic poles which are magnetically excited by energization of the coils to generate polarities, and only needs to be such that when the rotational shaft is attached to the unit fixing part, the magnetic poles and the outer circumferential surface of the magnet face each other via an air gap. Further, the coils only need to be configured to generate a magnetic flux suitably from one of the magnetic poles of the core toward the other.

The embodiment disclosed herein is merely an exemplification in every respect and should not be considered as limitative. The scope of the present invention is specified by the claims, not by the above-mentioned description. The scope of the present invention is intended to include all modifications in so far as they are within the scope of the appended claims.

Industrial Applicability

The present invention is suitable for, for example, a LiDAR apparatus, a scanner system, and the like.

Reference Signs List

1, 1B, 1C rotary reciprocating drive actuator
10, 10B, 10C Driving unit
15 Positioning recessed portion
20 Unit movable part
22, 22B, 22C Mirror part
24, 24B, 24C Rotational shaft
25 Spacer
26, 26B Magnet
27 Preload spring
27a Washer
28 Shaft support ring
30, 30B, 30C Unit fixing part
32, 33, 34, 36 Fastening member
39 Rotational shaft support portion
40, 40A, 40B Core assembly
41, 41A, 41B, 41C Magnetic pole core
42, 42A, 42B, 42C Magnetic path core
44, 45 Coil
46, 47 Bobbin
48, 48A, 48B Rotational angle position holding portion (first magnetic attraction member)
49 Magnetic pole surface
50, 50C First shaft support
51B First case
52, 52C, 62 Support body portion
52B Second case
53B Case-side bearing
54 First bearing
56 Attachment leg portion
57 Frame fixing surface
58 Core holding portion
60, 60C Second shaft support
61, 61B, 62B Fastening member
64 Second bearing
70 Angle sensor part
71 Circuit board
73 Optical sensor
74 Encoder disk
75 Stopper portion
76 Protrusion
77 Restricting portion

78 Sensor attachment portion
79 Board
80B Base part
80C Auxiliary frame
81B Base main body
82B, 83B Bearing
100 Scanner system
101 Laser beam emitting part
102 Laser control part
103 Drive signal supply part
104 Position control signal calculation part
221, 221B Mirror
222, 222B Mirror holder
223 Insertion hole
242 Tip end portion
261, 262 Pole
263, 264 Magnetic pole switching portion
401, 401B, 402B Attachment hole
402 Engagement recess
403, 404, 405 Positioning hole
411, 412 Rod-shaped body
411a, 412a Magnetic pole
411b, 412b, 415b, 421b, 422b Base end portion
413 Connecting frame-shaped body
413B Connecting body
415, 415B Complementary pole portion (second magnetic attraction member)
420, 420A Surrounding portion
421, 422 Frame lateral side portion
421B, 422B Leg portion
423, 423A Frame base portion
423B Magnetic-path-side connecting body
427, 427A, 427B Bridge portion
501, 502, 601, 602 Positioning hole
503, 603 Fastening hole
521, 621 Through hole
521B, 821, 822, 8111, 8121 Insertion holes
811, 812, 813 Wall portion
831, 832, 8112, 8122 Cutout hole
4130, 4130B Magnetic-pole-side contact surface
4131 Connecting side portion
4132, 4133 Protruding side portion
4150 Complementary pole surface
4201, 4230 Magnetic-path-side contact surface
4202 Cutout portion
5211, 6211 Bearing attachment portion
HF Magnetic attraction force (second magnetic attraction force)
K, K1, K2, K3 Core body
KF Magnetic attraction force (first magnetic attraction)

**Claims**

1. A rotary reciprocating drive actuator, comprising:

   a movable body (20) including a magnet (26) fixed to a shaft portion (24) to which a movable object (22) is connected, the movable body (20) being disposed to be capable of a reciprocating rotation about the shaft portion (24); and
   a fixing body (30) including a plurality of magnetic poles (411a, 412a), a first magnetic attraction member (48), and a second magnetic attraction member (415) that are disposed to face an outer circumference of the magnet (26), the plurality of magnetic poles (411a, 412a) including a plurality of coils (44, 45), the first magnetic attraction member (48) being configured to generate a first magnetic attraction force between the first magnetic attraction member (48) and the magnet (26), the first magnetic attraction force defining a rotational center position of the reciprocating rotation of the movable body (20), the second magnetic attraction member (415) being configured to generate a second magnetic attraction force between the second magnetic attraction member (415) and the magnet (26), the second magnetic attraction force canceling an axis-radial load acting by the first magnetic attraction force on the movable body (20), wherein

a magnetic flux passing through the plurality of magnetic poles (411a, 412a) is generated by energization of the plurality of coils (44, 45), causing the reciprocating rotation of the movable body (20) about an axis of the shaft portion (24) with reference to the rotational center position by electromagnetic interaction between the magnetic flux and the magnet (26), wherein:

a core body (K) including the plurality of magnetic poles (411a, 412a) includes:

a plurality of rod-shaped bodies (411, 412) including, at tip end portions, the plurality of magnetic poles (411a, 412a), respectively, the plurality of rod-shaped bodies (411, 412) extending in parallel to each other from base end portions (411b, 412b) to the tip end portions, the plurality of rod-shaped bodies (411, 412) including intermediate portions to which the plurality of coils (44, 45) are externally fitted, respectively,

a pair of leg portions (421, 422) joined respectively to the base end portions (411b, 412b) of the plurality of rod-shaped bodies (411, 412), the pair of leg portions (421, 422) extending along a parallel direction of the plurality of rod-shaped bodies (411, 412), and

a bridge portion (427) disposed to extend between tip end portions of the pair of leg portions (421, 422), the first magnetic attraction member (48) is disposed on the bridge portion (427), and

the second magnetic attraction member (415) is disposed midway between the plurality of magnetic poles (411a, 412a),

**characterized in that**

the core body (K) includes:

a magnetic pole core (41) with an integral structure including the plurality of rod-shaped bodies and a connecting body (413) joined to the base end portions (411b, 412b) of the plurality of rod-shaped bodies (411, 412) and extending in a direction intersecting the parallel direction of the plurality of rod-shaped bodies (411, 412), and

a magnetic path core (42) including the pair of leg portions (421, 422) and the bridge portion (427), the magnetic path core (42) forming a magnetic path of the magnetic flux with the magnetic pole core (41), and

the second magnetic attraction member (415) is disposed integrally with the connecting body (413) to extend along the parallel direction of the plurality of rod-shaped bodies (411, 412).

2. The rotary reciprocating drive actuator according to claim 1, wherein
the second magnetic attraction member (415) is a magnetic material integrally disposed in the core body (K) including the plurality of magnetic poles (411a, 412a).

3. The rotary reciprocating drive actuator according to claim 1, wherein
the plurality of coils (44, 45) are surrounded by the pair of leg portions (421, 422), the bridge portion (427), the base end portions (411b, 412b) of the plurality of rod-shaped bodies (411, 412), and the connecting body (413).

4. The rotary reciprocating drive actuator according to any one of claims 1 to 3, wherein
the plurality of magnetic poles (411a, 412a) and the second magnetic attraction member (415) are composed of a laminated member.

5. The rotary reciprocating drive actuator according to any one of claims 1 to 4, wherein
the plurality of magnetic poles (411a, 412a) are two poles, the magnet (26) has different two magnetic poles (411a, 412a) correspondingly to the two poles, and a magnetic pole switching portion of the magnet (26) is provided to be disposed at a position symmetrically facing each of the plurality of magnetic poles (411a, 412a) when the magnet (26) is held at the rotational center position by the first magnetic attraction member (48).

6. The rotary reciprocating drive actuator according to any one of claims 1 to 5, wherein
the first magnetic attraction member (48) is a magnet.

7. The rotary reciprocating drive actuator according to any one of claims 1 to 5, wherein
   the first magnetic attraction member (48) is a magnetic material.

8. The rotary reciprocating drive actuator according to any one of claims 1 to 7, further comprising:
   a pair of shaft supports (50, 60) disposed to sandwich the plurality of magnetic poles (411a, 412a) in an extending direction of the shaft portion (24), the pair of shaft supports (50, 60) being configured to support the shaft portion (24) via respective bearings at opposite sides of the plurality of magnetic poles (411a, 412a) such that the shaft portion (24) is rotatable.

9. The rotary reciprocating drive actuator according to claim 8, wherein:

   the movable object (22C) is connected to one end portion of the shaft portion (24C) which protrudes from one shaft support (50C) of the pair of shaft supports (50C, 60C), and
   a rotational shaft support portion (39) to be fixed to a supporting wall portion (811) disposed to sandwich the movable object (22C) between the supporting wall portion (811) and the one shaft support (50C) is disposed on a tip end of the movable object (22) fixed to the one end portion of the shaft portion (24).

10. The rotary reciprocating drive actuator according to any one of claims 1 to 9, wherein
    the movable object (22) is a mirror (22) that reflects scanning light.

**Patentansprüche**

1. Rotierender, sich hin- und herbewegender Antriebsaktuator, umfassend:

   einen beweglichen Körper (20), der einen Magneten (26) beinhaltet, der an einem Wellenabschnitt (24) befestigt ist, mit dem ein bewegliches Objekt (22) verbunden ist, wobei der bewegliche Körper (20) so angeordnet ist, dass er zu einer sich hin- und herbewegenden Rotation um den Wellenabschnitt (24) herum fähig ist; und
   einen Befestigungskörper (30), beinhaltend eine Vielzahl von Magnetpolen (411a, 412a), ein erstes Magnetanziehungselement (48) und ein zweites Magnetanziehungselement (415), die so angeordnet sind, dass sie einem Außenumfang des Magneten (26) zugewandt sind, wobei die Vielzahl von Magnetpolen (411a, 412a) eine Vielzahl von Spulen (44, 45) beinhaltet, wobei das erste Magnetanziehungselement (48) dazu konfiguriert ist, eine erste Magnetanziehungskraft zwischen dem ersten Magnetanziehungselement (48) und dem Magneten (26) zu erzeugen, wobei die erste Magnetanziehungskraft eine Rotationszentrumsposition der sich hin- und herbewegenden Rotation des beweglichen Körpers (20) definiert, wobei das zweite Magnetanziehungselement (415) dazu konfiguriert ist, eine zweite Magnetanziehungskraft zwischen dem zweiten Magnetanziehungselement (415) und dem Magneten (26) zu erzeugen, wobei die zweite Magnetanziehungskraft eine achsradiale Last, die durch die erste Magnetanziehungskraft auf den beweglichen Körper (20) wirkt, aufhebt, wobei
   ein Magnetfluss, der durch die Vielzahl von Magnetpolen (411a, 412a) fließt, durch Erregung der Vielzahl von Spulen (44, 45) erzeugt wird, was die sich hin- und herbewegende Rotation des beweglichen Körpers (20) um eine Achse des Wellenabschnitts (24) in Bezug auf die Rotationszentrumsposition durch elektromagnetische Interaktion zwischen dem Magnetfluss und dem Magneten (26) verursacht, wobei:
   ein Kernkörper (K), der die Vielzahl von Magnetpolen (411a, 412a) beinhaltet, Folgendes beinhaltet:

   eine Vielzahl von stangenförmigen Körpern (411, 412), die, an Spitzenendabschnitten, jeweils die Vielzahl von Magnetpolen (411a, 412a) beinhalten, wobei die Vielzahl von stangenförmigen Körpern (411, 412) sich von Basisendabschnitten (411b, 412b) zu den Spitzenendabschnitten parallel zueinander erstrecken, wobei die Vielzahl von stangenförmigen Körpern (411, 412) Zwischenabschnitte beinhalten, an denen jeweils die Vielzahl von Spulen (44, 45) außen angebracht sind,
   ein Paar von Schenkelabschnitten (421, 422), die jeweils an die Basisendabschnitte (411b, 412b) der Vielzahl von stangenförmigen Körpern (411, 412) angefügt sind, wobei sich das Paar von Schenkelabschnitten (421, 422) entlang einer parallelen Richtung der Vielzahl von stangenförmigen Körpern (411, 412) erstreckt, und
   einen Brückenabschnitt (427), der so angeordnet ist, dass er sich zwischen Spitzenendabschnitten des Paares von Schenkelabschnitten (421, 422) erstreckt,
   das erste Magnetanziehungselement (48) auf dem Brückenabschnitt (427) angeordnet ist, und
   das zweite Magnetanziehungselement (415) auf halbem Weg zwischen der Vielzahl von Magnetpolen (411a, 412a) angeordnet ist,

**gekennzeichnet dadurch, dass**
der Kernkörper (K) folgendes beinhaltet:

einen Magnetpolkern (41) mit einer einstückigen Struktur, der die Vielzahl von stangenförmigen Körpern beinhaltet und einen Verbindungskörper (413), der an die Basisendabschnitte (411b, 412b) der Vielzahl von stangenförmigen Körpern (411, 412) angefügt ist und sich in eine Richtung erstreckt, die die parallele Richtung der Vielzahl von stangenförmigen Körpern (411, 412) schneidet, und
einen Magnetpfadkern (42), der das Paar von Schenkelabschnitten (421, 422) und den Brückenabschnitt (427) beinhaltet, wobei der Magnetpfadkern (42) einen Magnetpfad des Magnetflusses mit dem Magnetpolkern (41) ausbildet, und
das zweite Magnetanziehungselement (415) einstückig mit dem Verbindungskörper (413) so angeordnet ist, dass es sich entlang der parallelen Richtung der Vielzahl von stangenförmigen Körpern (411, 412) erstreckt.

2. Rotierender sich hin- und herbewegender Antriebsaktuator nach Anspruch 1,
wobei
das zweite Magnetanziehungselement (415) ein Magnetmaterial ist, das einstückig in dem Kernkörper (K) angeordnet ist, der die Vielzahl von Magnetpolen (411a, 412a) beinhaltet.

3. Rotierender sich hin- und herbewegender Antriebsaktuator nach Anspruch 1,
wobei
die Vielzahl von Spulen (44, 45) von dem Paar von Schenkelabschnitten (421, 422), dem Brückenabschnitt (427), den Basisendabschnitten (411b, 412b) der Vielzahl von stangenförmigen Körpern (411, 412) und dem Verbindungskörper (413) umgeben sind.

4. Rotierender, sich hin- und herbewegender Antriebsaktuator nach einem der Ansprüche 1 bis 3, wobei
die Vielzahl von Magnetpolen (411a, 412a) und das zweite Magnetanziehungselement (415) aus einem laminierten Element bestehen.

5. Rotierender, sich hin- und herbewegender Antriebsaktuator nach einem der Ansprüche 1 bis 4, wobei
die Vielzahl von Magnetpolen (411a, 412a) zwei Pole sind, der Magnet (26) zwei unterschiedliche Magnetpole (411a, 412a) entsprechend den zwei Polen aufweist und ein Magnetpolumschaltabschnitt des Magneten (26) dazu bereitgestellt ist, in einer Position angeordnet zu sein, die symmetrisch jedem der Vielzahl von Magnetpolen (411a, 412a) zugewandt ist, wenn der Magnet (26) von dem ersten Magnetanziehungselement (48) in der Rotationszentrumsposition gehalten wird.

6. Rotierender, sich hin- und herbewegender Antriebsaktuator nach einem der Ansprüche 1 bis 5, wobei
das erste Magnetanziehungselement (48) ein Magnet ist.

7. Rotierender, sich hin- und herbewegender Antriebsaktuator nach einem der Ansprüche 1 bis 5, wobei
das erste Magnetanziehungselement (48) ein Magnetmaterial ist.

8. Rotierender, sich hin- und herbewegender Antriebsaktuator nach einem der Ansprüche 1 bis 7, ferner umfassend:
ein Paar von Wellenträgern (50, 60), die so angeordnet sind, dass sie die Vielzahl von Magnetpolen (411a, 412a) in einer sich erstreckenden Richtung des Wellenabschnitts (24) einschließen, wobei das Paar von Wellenträgern (50, 60) dazu konfiguriert ist, den Wellenabschnitt (24) über jeweilige Lager auf gegenüberliegenden Seiten der Vielzahl von Magnetpolen (411a, 412a) derart zu tragen, dass der Wellenabschnitt (24) rotierbar ist.

9. Rotierender sich hin- und herbewegender Antriebsaktuator nach Anspruch 8,
wobei:

das bewegliche Objekt (22C) mit einem Endabschnitt des Wellenabschnitts (24C) verbunden ist, der von einem Wellenträger (50C) des Paares von Wellenträgern (50C, 60C) vorsteht, und
ein Rotationswellenträgerabschnitt (39), der an einem Trägerwandabschnitt (811) zu befestigen ist, der so angeordnet ist, dass er das bewegliche Objekt (22C) zwischen dem Trägerwandabschnitt (811) einschließt und der eine Wellenträger (50C) an einem Spitzenende des beweglichen Objekts (22) angeordnet ist, das an dem einen Endabschnitt des Wellenabschnitts (24) befestigt ist.

**10.** Rotierender, sich hin- und herbewegender Antriebsaktuator nach einem der Ansprüche 1 bis 9, wobei das bewegliche Objekt (22) ein Spiegel (22) ist, der Abtastlicht reflektiert.

**Revendications**

**1.** Actionneur d'entraînement rotatif alternatif, comprenant :

un corps mobile (20) incluant un aimant (26) fixé à une partie d'arbre (24) à laquelle un objet mobile (22) est connecté, le corps mobile (20) étant disposé de manière à pouvoir effectuer une rotation alternative autour de la partie d'arbre (24) ; et

un corps fixe (30) incluant une pluralité de pôles magnétiques (411a, 412a), un premier élément d'attraction magnétique (48), et un deuxième élément d'attraction magnétique (415) qui sont disposés de manière à faire face à une circonférence externe de l'aimant (26), la pluralité de pôles magnétiques (411a, 412a) incluant une pluralité de bobines (44, 45), le premier élément d'attraction magnétique (48) étant configuré pour générer une première force d'attraction magnétique entre le premier élément d'attraction magnétique (48) et l'aimant (26), la première force d'attraction magnétique définissant une position de centre de rotation de la rotation alternative du corps mobile (20), le deuxième élément d'attraction magnétique (415) étant configuré pour générer une deuxième force d'attraction magnétique entre le deuxième élément d'attraction magnétique (415) et l'aimant (26), la deuxième force d'attraction magnétique annulant une charge radiale d'axe agissant, par la première force d'attraction magnétique, sur le corps mobile (20), dans lequel

un flux magnétique passant à travers la pluralité de pôles magnétiques (411a, 412a) est généré par alimentation électrique de la pluralité de bobines (44, 45), provoquant la rotation alternative du corps mobile (20) autour d'un axe de la partie d'arbre (24) par rapport à la position de centre de rotation par interaction électromagnétique entre le flux magnétique et l'aimant (26), dans lequel :

un corps de noyau (K) incluant la pluralité de pôles magnétiques (411a, 412a) inclut :

une pluralité de corps en forme de tige (411, 412) incluant, à des parties d'extrémité distale, la pluralité de pôles magnétiques (411a, 412a), respectivement, la pluralité de corps en forme de tige (411, 412) s'étendant parallèlement les uns aux autres depuis des parties d'extrémité de base (411b, 412b) jusqu'aux parties d'extrémité distale, la pluralité de corps en forme de tige (411, 412) incluant des parties intermédiaires sur lesquelles la pluralité de bobines (44, 45) est montée extérieurement, respectivement,

une paire de parties de branches (421, 422) raccordées respectivement aux parties d'extrémité de base (411b, 412b) de la pluralité de corps en forme de tige (411, 412), la paire de parties de branches (421, 422) s'étendant selon une direction parallèle de la pluralité de corps en forme de tige (411, 412), et

une partie de pont (427) disposée de manière à s'étendre entre des parties d'extrémité distale de la paire de parties de branches (421, 422),

le premier élément d'attraction magnétique (48) est disposé sur la partie de pont (427), et

le deuxième élément d'attraction magnétique (415) est disposé à mi-chemin entre la pluralité de pôles magnétiques (411a, 412a),

**caractérisé en ce que**

le corps de noyau (K) inclut :

un noyau de pôle magnétique (41) présentant une structure intégrale incluant la pluralité de corps en forme de tige et un corps de liaison (413) raccordé aux parties d'extrémité de base (411b, 412b) de la pluralité de corps en forme de tige (411, 412) et s'étendant dans une direction intersectant la direction parallèle de la pluralité de corps en forme de tige (411, 412), et

un noyau de circuit magnétique (42) incluant la paire de parties de branches (421, 422) et la partie de pont (427), le noyau de circuit magnétique (42) formant un circuit magnétique du flux magnétique avec le noyau de pôle magnétique (41), et

le deuxième élément d'attraction magnétique (415) est disposé de manière intégrale avec le corps de liaison (413) de manière à s'étendre selon la direction parallèle de la pluralité de corps en forme de tige (411, 412).

**2.** Actionneur d'entraînement rotatif alternatif selon la revendication 1, dans lequel le deuxième élément d'attraction magnétique (415) est un matériau magnétique disposé de manière intégrale dans le corps de noyau (K) incluant la pluralité de pôles magnétiques (411a, 412a).

**3.** Actionneur d'entraînement rotatif alternatif selon la revendication 1, dans lequel
la pluralité de bobines (44, 45) est entourée par la paire de parties de branches (421, 422), la partie de pont (427), les parties d'extrémité de base (411b, 412b) de la pluralité de corps en forme de tige (411, 412), et le corps de liaison (413).

**4.** Actionneur d'entraînement rotatif alternatif selon l'une quelconque des revendications 1 à 3, dans lequel
la pluralité de pôles magnétiques (411a, 412a) et le deuxième élément d'attraction magnétique (415) sont constitués d'un élément laminé.

**5.** Actionneur d'entraînement rotatif alternatif selon l'une quelconque des revendications 1 à 4, dans lequel
la pluralité de pôles magnétiques (411a, 412a) correspond à deux pôles, l'aimant (26) présente deux pôles magnétiques différents (411a, 412a) correspondant aux deux pôles, et une partie de commutation de pôle magnétique de l'aimant (26) est prévue pour être disposée à une position faisant face de manière symétrique à chacun de la pluralité de pôles magnétiques (411a, 412a) lorsque l'aimant (26) est maintenu à la position de centre de rotation par le premier élément d'attraction magnétique (48).

**6.** Actionneur d'entraînement rotatif alternatif selon l'une quelconque des revendications 1 à 5, dans lequel
le premier élément d'attraction magnétique (48) est un aimant.

**7.** Actionneur d'entraînement rotatif alternatif selon l'une quelconque des revendications 1 à 5, dans lequel
le premier élément d'attraction magnétique (48) est un matériau magnétique.

**8.** Actionneur d'entraînement rotatif alternatif selon l'une quelconque des revendications 1 à 7, comprenant en outre :
une paire de supports d'arbre (50, 60) disposés de manière à encadrer la pluralité de pôles magnétiques (411a, 412a) dans une direction d'extension de la partie d'arbre (24), la paire de supports d'arbre (50, 60) étant configurée pour supporter la partie d'arbre (24) via des paliers respectifs sur des côtés opposés de la pluralité de pôles magnétiques (411a, 412a) de sorte que la partie d'arbre (24) soit rotative.

**9.** Actionneur d'entraînement rotatif alternatif selon la revendication 8, dans lequel :

l'objet mobile (22C) est raccordé à une partie d'extrémité de la partie d'arbre (24C) qui fait saillie depuis un support d'arbre (50C) de la paire de supports d'arbre (50C, 60C), et
une partie de support d'arbre de rotation (39) destinée à être fixée à une partie de paroi de support (811) disposée de manière à encadrer l'objet mobile (22C) entre la partie de paroi de support (811) et ledit support d'arbre (50C) est disposée à une extrémité distale de l'objet mobile (22) fixé à ladite partie d'extrémité de la partie d'arbre (24).

**10.** Actionneur d'entraînement rotatif alternatif selon l'une quelconque des revendications 1 à 9, dans lequel
l'objet mobile (22) est un miroir (22) qui réfléchit la lumière de balayage.

<u>1</u>

**FIG. 1**

FIG. 2

FIG. 3

FIG. 4

FIG. 5

FIG. 6

FIG. 7

K

FIG. 8

40A

FIG. 9

40A

FIG. 10

<u>K1</u>

FIG. 11

FIG. 12

FIG. 13

FIG. 14

FIG. 15

<u>1</u>

FIG. 16

FIG. 17

FIG. 18

EP 4 152 579 B1

FIG. 19

EP 4 152 579 B1

1C

FIG. 20

FIG. 21

**FIG. 22**

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4727509 B
- US 5708406 A
- JP H06292349 A
- JP H0731119 A